# EUROPÄISCHE PATENTSCHRIFT

(11) **EP 2 720 408 B1**
(45) Veröffentlichungstag und Bekanntmachung des Hinweises auf die Patenterteilung: **21.09.2016**
(21) Anmeldenummer: 13004850.7
(22) Anmeldetag: 09.10.2013
(51) Int. Cl.: H04L 12/24

(54) **Verfahren und Datenübertragungsgerät zur Datenübertragung innerhalb eines xDSL-Datenübertragungssystems**
Method and data transmission apparatus for transmitting data within a xDSL data transmission system
Procédé et appareil de transmission de données pour la transmission de données au sein d'un système de transmission de données xDSL

(30) Priorität: 15.10.2012 DE 102012020140
(43) Veröffentlichungstag der Anmeldung: 16.04.2014
(73) Patentinhaber: Phoenix Contact GmbH & Co. KG, 32825 Blomberg (DE)
(72) Erfinder: Klocke, Matthias, 37671 Höxter (DE)
(74) Vertreter: Bill, Burkart Hartmut

(56) Entgegenhaltungen:
- US-A1- 2008 205 298
- US-A1- 2010 214 911
- US-A1- 2011 099 546

## Beschreibung

Die Erfindung betrifft Verfahren und Datenübertragungsgeräte zur Datenübertragung innerhalb eines xDSL-Datenübertragungssystems, welches wenigstens zwei Ethernet-Netzwerke mittels xDSL-Verbindungsleitungen miteinander verbindet, sowie ein entsprechendes Datenübertragungssystem.

Die Erfindung geht von einem Datenübertragungssystem aus, das zur Verbindung mehrerer Ethernet-Netzwerke über xDSL-Verbindungsleitungen, insbesondere über SHDSL-Standleitungsverbindungen, dient. Derartige Datenübertragungssysteme können in einer Punkt-zu-Punkt-Verbindungsstruktur, wie z.B. in der anhängenden Fig. 6 skizziert, einer Linienstruktur, wie z.B. in der anhängenden Fig. 7 skizziert, einer Ringstruktur, wie z.B. in der anhängenden Fig. 8 skizziert, oder in einer Kombination mehrerer solcher Systeme, wie z.B. in der anhängenden Fig. 9 skizziert, aufgebaut sein, wobei eine Linien- oder Ringstruktur grundsätzlich aus mehreren Punktzu-Punkt-Verbindungen gebildet wird.

Im Rahmen der DSL (Digital Subscriber Line, digitaler Teilnehmeranschluss)-Übertragungstechnik sind heute eine Vielzahl von Zugriffstechniken entwickelt, wie z.B. den asymmetrischen digitalen Teilnehmeranschluss (XDSL; Asymmetric Digital Subscriber Line), den symmetrischen digitalen Teilnehmeranschluss (SDSL; Symmetric Digital subscriber Line), den Einzelleitungs-Hochgeschwindigkeitsdigitalen Teilnehmeranschluss (SHDSL or G.SHDSL; Single-Pair Highspeed Digital Subscriber Line or Global standard for Single-Pair High-speed Digital Subscriber Line), den digitalen Teilnehmeranschluss mit sehr hoher Bitrate (VDSL; Very high data rate Digital Subscriber Line), und andere. Alle diese Techniken im Rahmen der DSL-Übertragungstechnik, welche auf unterschiedliche Teilnehmeranforderungen angepasst sind, werden unter dem Begriff "xDSL" zusammengefasst.

Die allen diesen Techniken gemeinsam zu Grunde liegende DSL-Übertragungstechnik als eine Art von Breitbandzugriffstechnik nutzt hierbei verdrillte Aderpaar-Leitungen als Verbindungsleitungen für eine jeweilige xDSL-Übertragungsstrecke und also als Übertragungsmedium zwischen wenigstens zwei xDSL-Datenübertragungsgeräten, wobei im einfachsten Fall das erste dieser zwei xDSL-Datenübertragungsgeräte den Anfang eines xDSL-Übertragungssystems bildet, z.B. auf Seiten einer zentralen oder dezentralen Vermittlungsstelle und das zweite dieser zwei xDSL-Datenübertragungsgeräte den Abschluss des xDSL-Übertragungssystems bildet, z.B. auf Seiten eines Teilnehmeranschlusses. Ferner können einzelne xDSL-Übertragungsstrecken unter Nutzung weiterer xDSL-Datenübertragungsgeräte miteinander verbunden sein, so dass durch Aneinanderreihung einzelner xDSL-Übertragungsstrecken innerhalb eines xDSL-Datenübertragungssystems die Gesamtlänge des xDSL-Datenübertragungssystems vergrößert werden kann.

Auch können zwischen den xDSL-Datenübertragungsgeräten, welche den Anfang eines xDSL-Übertragungssystems und den Abschluss des xDSL-Übextragungssystems bilden, weitere xDSL-Datenübertragungsgeräte geschaltet sein. Bei einem SHDSL-Datenübertragungssystem z.B. können gemäß Standard z.B. acht weitere SHDSL-Datenübertragungsgeräte zwischen diesen SHDSL-Datenübertragungsgeräten, welche den Anfang eines SHDSL-Übertragungssystems und den Abschluss des SHDSL-Übertragungssystems bilden, geschaltet sein.

Darüber hinaus ist allen diesen Techniken gemeinsam, dass gemäß jeweiligem xDSL-Standard ein eingebetteter Betriebskanal (EOC; Embedded Operation Channel) derart vorgesehen ist, dass diesem jeweils eine geringe Bandbreite im Overhead eines jeweiligen xDSL-Datenübertragungsrahmens zugewiesen ist, um einen virtuellen Kanal zu bilden.

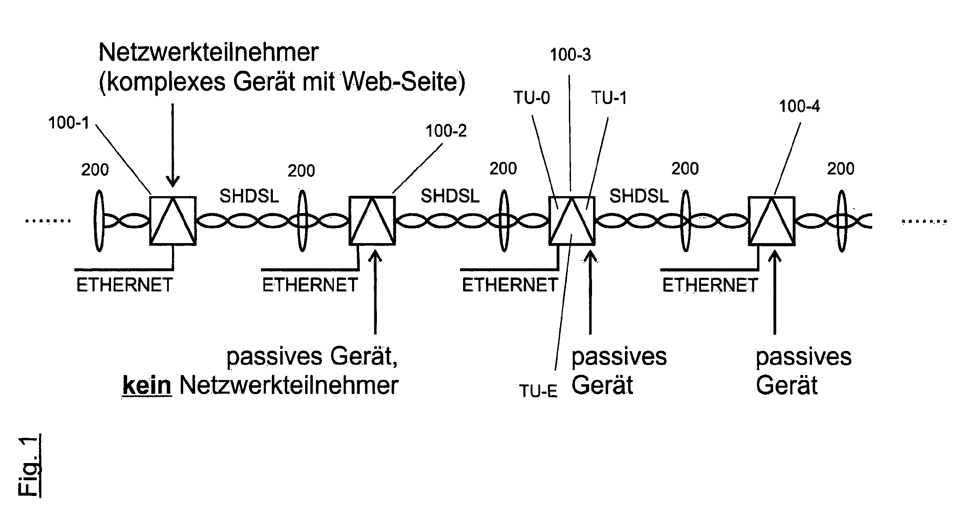

Ferner können xDSL-Datenübertragungsgeräte, zwischen denen jeweils eine xDSL-Übertragungsstrecke gebildet ist und aus denen ein solches xDSL-Datenübertragungssystem, über welche wenigstens zwei Ethernet-Netzwerke mittels xDSL-Verbindungsleitungen miteinander verbunden sind, aufgebaut sind und über welche gegebenenfalls auch solche Ethernet-Netzwerke an ein solches Datenübertragungssystem angebunden sein können, wie z.B. in der anhängenden Figur 1 basierend auf einem SHDSL-Datenübertragungssystem skizziert, in aktive und passive xDSL-Datenübertragungsgeräte unterteilt werden.

Als derartige aktive xDSL-Datenübertragungsgeräte sind im Rahmen der Erfindung wiederum derartige xDSL-Datenübertragungsgeräte definiert, die direkt aus dem Ethernet-Netzwerk heraus, welches sie an das Datenübertragungssystem anbinden, angesprochen werden können und also selbst Teilnehmer dieses Ethernet-Netzwerks sind. Solche aktiven xDSL-Datenübertragungsgeräte verfügen in der Regel über eine Web-Seite oder ein Web-basiertes Management, über die sie konfiguriert und diagnostiziert werden können, oder sind als Repeater ausgebildet, die eine aus dem Ethernet-Netzwerk her aufrufbare Diagnose zur Verfügung stellen. Als passive xDSL-Datenübertragungsgeräte sind im Rahmen der Erfindung wiederum derartige Datenübertragungsgeräte definiert, die nicht aus einem Ethernet-Netzwerk heraus angesprochen werden können und sich ausschließlich um die Übertragung von Daten kümmern. Solche passiven xDSL-Datenübertragungsgeräte können z.B. einfache Medienkonverter, einfache Standleitungsmodems oder einfache Repeater sein. Derartige passive xDSL-Datenübertragungsgeräte können in der Regel lediglich entweder über DIP-Schalter oder über eine lokal verfügbare Schnittstelle mit Hilfe einer Software konfiguriert werden.

Vorteile solcher passiver xDSL-Datenübertragungsgeräte gegenüber solchen aktiven xDSL-Datenübertragungsgeräten können darin gesehen werden, dass bei der Inbetriebnahme nur wenige oder sogar keine Einstellungen vorgenommen werden müssen, wohingegen die Inbetriebnahme und Konfiguration aktiver xDSL-Datenübertragungsgeräte häufig komplexer ist oder Spezialwissen erfordert. Außerdem sind passive xDSL-Datenübertragungsgeräte aufgrund geringerer Anforderungen an die Hardware meist preisgünstiger als aktive.

Nachteile passiver xDSL-Datenübertragungsgeräte gegenüber aktiven xDSL-Datenübertragungsgeräte können darin gesehen werden, dass eine Diagnose und Konfiguration zumindest im vollen Umfang nur lokal am Gerät möglich ist, wohingegen aktive xDSL-Datenübertragungsgeräte die Möglichkeit bieten, eine Konfiguration und eine Diagnose von einem beliebigen Punkt des Ethernet-Netzwerks her, welches sie an das xDSL-Datenübertragungssystem anbinden, zu ermöglichen. Da derartige xDSL-Datenübertragungssysteme häufig große räumliche Distanzen überbrücken und aus vielen xDSL-Datenübertragungsgeräten aufgebaut sein können, ergibt sich z.B. bei der Fehlersuche ein erheblicher zeitlicher Vorteil.

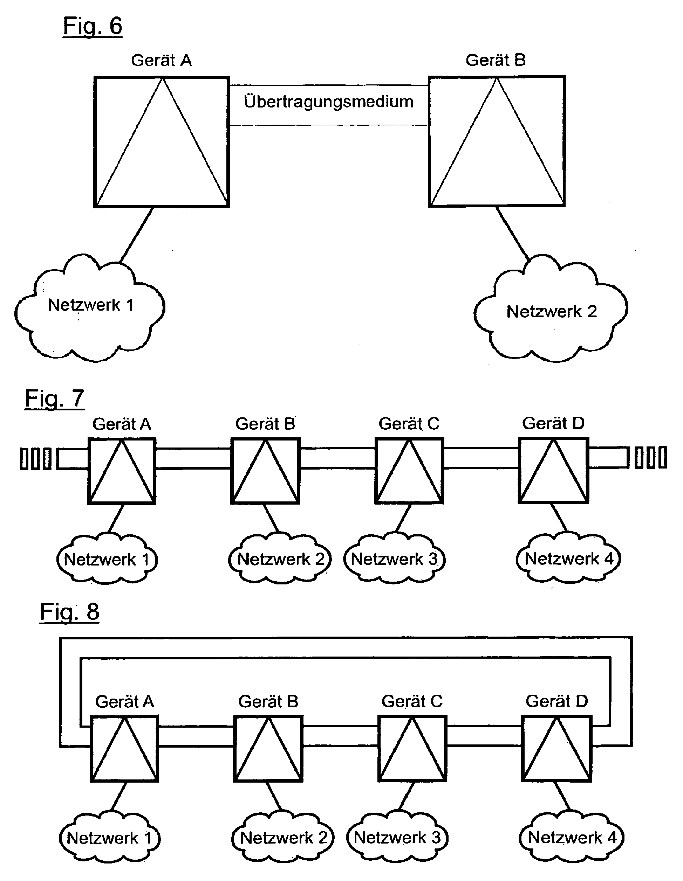

Eine Anforderung an ein xDSL-Datenübertragungssystem, das mehrere Ethernet-Netzwerke untereinander verbindet, ist ferner eine hohe Verfügbarkeit. Diese wird häufig durch den Aufbau einer redundanten Struktur gewährleistet. Dabei wird eine Weiterleitung von Daten auch bei Ausfall einer einzelnen xDSL-Verbindung sichergestellt. Eine häufig angewendete redundante Struktur ist hierbei die Ringstruktur (Fig. 8). Dabei wird jedoch eine xDSL-Übertragungsstrecke des Rings für die Datenübertragung gesperrt. Bei Ausfall einer weiteren xDSL-Übertragungsstrecke wird die gesperrte xDSL-Übertragungsstrecke wieder aktiviert, so dass alle xDSL-Datenübertragungsgeräte erreichbar bleiben.

Die Steuerung, welche xDSL-Übertragungsstrecke in einem solchen System für die Datenübertragung gesperrt werden muss, übernehmen zurzeit Standard-Protokolle, wie z.B. RSTP (Rapid-Spanning-Tree-Protocol) oder MRP (Media Redundancy Protocol) bei Ethernet. Es gibt auch eine ganze Reihe von proprietären Protokollen, die diese Aufgabe übernehmen. Zurzeit sind passive xDSL-Datenübertragungsgeräte aber nicht in der Lage, diese Protokolle zu unterstützen, da diese Protokolle voraussetzen, dass die Datenübertragungsgeräte Zugriff auf die zu übertragenden Daten haben.

Ferner ist bei xDSL-Datenübertragungsgeräten bislang über den EOC-Kanal eine Diagnose einzelner XDSL-Übertragungsstrecken möglich. Da sich allerdings dieser virtuelle Kanal jeweils lediglich über eine einzelne Punktzu-Punkt-Verbindung erstreckt, bezieht sich die damit mögliche Diagnose zurzeit lediglich auf Parameter bestimmter xDSL--Übextragungsstrecken, und eine Diagnose oder gar eine Konfiguration eines beliebigen xDSL-Datenübertragungsgeräts, und also insbesondere eine weitergehende Diagnose, die einen Abruf gerätespezifischer Daten ermöglicht, die nicht in einer Norm oder einer Recommendation vorgesehen sind, über diesen virtuellen Kanal ist momentan nicht möglich.

In der US 2008/0205298 A1 ist ein Kommunikationsnetzwerk beschrieben mit einer zentralen DSL-Einheit und wenigstens zwei entfernten DSL-Einheiten, wobei die zentrale DSL-Einheit wenigstens einen Anwendungsanschluss und mehrere DSL-Anschlüsse aufweist und die entfernten DSL-Einheiten jeweils wenigstens einen Anwendungs- und einen DSL-Anschluss aufweisen. Dabei ist jede der entfernten DSL-Einheiten mit ihrem DSL-Anschluss über jeweils eine DSL-Leitung mit einem der DSL-Anschlüsse der zentralen DSL-Einheit verbunden, wobei jede der DSL-Leitungen einen eingebetteten Betriebskanal (EOC) aufweist. Ferner ist wenigstens ein Anwendungsanschluss der zentralen DSL-Einheit mit wenigstens einem Anwendungsanschluss einer der beiden entfernten DSL-Einheiten kommunikativ gekoppelt.

Insgesamt wird dadurch eine große Flexibilität hinsichtlich des Verbindens mehrerer verschiedener Anwendungsanschlüsse ermöglicht. Über den eingebetteten Betriebskanal (EOC) der jeweiligen DSL-Leitung kann die zentrale DSL-Einheit die jeweilige entfernte DSL-Einheit einzeln konfigurieren.

Die US 2010/214911 A1 beschreibt dynamische und asynchrone Ringnetzwerke, wie z.B. asymetrische DSL-Ringe (ADR), und entsprechende Kommunikationsgeräte und -verfahren. Eine konfigurierbare Größe ist dabei für DSL-Verbindungen das sogenannte "durchschnittliche Bandbreitenbedarfsverhaltnis" (Average Bandwidth Dernand Ratio, ABDR), welches das Verhältnis des Downstream-Bandbreitenbedarfs zum Upstream-Bandbreitenbedarfs darstellt. So kann z.B. ein Knoten eines ADRs gegenüber einer zentralen Endstelle eine Anfrage bzgl. des Raten-Anpassungs-Verhältnisses über den eingebetteten Betriebskanal (EOC) senden, wobei die entsprechende Nachricht gemäß Simple Network Management Protocol (SNMP) codiert über den EOC übertragen wird.

Die US 2011/0099546 A1 beschreibt ein System und Verfahren für den Softwaredownload über SHDSL, wobei über eine DSL-Verbindung ein Datenkanal und ein eingebetteter Betriebskanal (EOC) bereitstehen und wobei die Software z.B. Firmware bzw. ein firmwareupdate umfasst. Eine für den Download vorgesehene Datei ist unterteilt in einen Header und mehrere Datensätze, wobei für den Download der Header über den EOC und die Datensätze der Datei über den Datenkanal, z.B. von einer zentralen Endstelle zu einer entfernten Endstelle, übertragen werden.

Eine Aufgabe der der Erfindung ist es daher, ein Verfahren und xDSL-Datenübertragungsgeräte für ein xDSL-Datenübertragungssystem, insbesondere für ein SHDSL-Datenübertragungssystem zur Verbindung einzelner Ethernet-Netzwerke aufzuzeigen, womit ein Aufbau aus möglichst wenigen aktiven xDSL-Datenübertragungsgeräten ermöglicht wird, insbesondere um Hardwarekosten und Zeit bei der Inbetriebnahme zu sparen, und womit eine Diagnose des xDSL-Datenübertragungssystems oder vorzugsweise gar eine Diagnose und gegebenenfalls Konfiguration eines beliebigen xDSL-Datenübertragungsgeräts von einer im Wesentlichen beliebigen Stelle des xDSL-Datenübertragungssystems ermöglicht wird, zumindest, wenn mindestens ein aktives xDSL-Datenübertragungsgerät im xDSL-Datenübertragungssystem vorhanden ist. Sollten nur passive xDSL-Datenübertragungsgeräte im xDSL-Datenübertragungssystem vorhanden sein, so muss es zweckmäßig möglich sein, von einem lokal verbundenen passiven xDSL-Datenübertragungsgerät aus alle xDSL-Datenübertragungsgeräte des xDSL-Datenübertragungssystem zu erreichen. Die Diagnose soll vorzugsweise sowohl die aktiven als auch die passiven xDSL-Datenübertragungsgeräte des xDSL-Datenübertragungssystems in ihrer physikalischen Anordnung anzeigen.

Erfindungsgemäße Lösungen sind durch die Gegenstände der anhängigen unabhängigen Ansprüche gegeben, wobei bevorzugte Ausführungsformen und Weiterbildungen Gegenstand der abhängigen Ansprüche sind.

Demgemäß sieht die Erfindung ein Datenübertragungsverfahren vor, und zwar zur Datenübertragung innerhalb eines xDSL-Datenübertragungssystems, welches aus wenigstens zwei xDSL-Datenübertragungsgeräten aufgebaut ist, die wenigstens zwei Ethernet-Netzwerke an das xDSL-Datenübertragungssystem anbinden, wobei zur Übertragung von Nutzdaten über eine, zwischen jeweils zwei benachbart angeordneten xDSL-Datenübertragungsgeräten gebildete xDSL-Übertragungsstrecke jeweils ein xDSL-Datenübertragungsrahmen gemäß einem ersten Protokollstapel genutzt wird, innerhalb welchem gemäß dem ersten Protokollstapel zusätzlich ein eingebetteter Betriebskanal vorgesehen ist. Das Verfahren zeichnet sich dadurch aus, dass ein zweiter, sich von dem ersten Protokollstapel unterscheidender Protokollstapel vorgesehen wird, demgemäß ein Zugriff auf den eingebetteten Betriebskanal innerhalb eines xDSL-Datenübertragungsgeräts unabhängig von einem Zugriff auf die Nutzdaten abgearbeitet wird, und in Folge Managementdaten zur Diagnose und Konfiguration des xDSL-Datenübertragungssystems, in den eingebetteten Betriebskanals unabhängig von den Nutzdaten des xDSL-Datenübertragungsrahmens hinzugefügt, innerhalb diesem übertragen und aus diesen ausgelesen werden, wobei durch die jeweils unabhängige Abarbeitung des Zugriffs auf den eingebetteten Betriebskanal, ausgehend von jedem solcher xDSL-Datenübertragungsgeräte, eine Vielzahl von weiteren xDSL-Datenübertragungsgeräten direkt adressierbar ist, und wobei eine gegebenenfalls durch den jeweiligen Standard festgelegte Beschränkung der Teilnehmeranzahl eines solchen xDSL-Datenübertragungssystems entfällt.

Hierdurch ist es möglich, über den bereits eingebetteten Betriebskanal eines xDSL-Datenübertragungsrahmens Managementdaten parallel zu den Nutzdaten zwischen sowohl aktiven und passiven xDSL-Datenübertragungsgeräten auszutauschen, so dass auch Daten zur Diagnose von am xDSL-Datenübertragungssystem beteiligten xDSL-Datenübertragungsgeräte erfasst werden können und hierauf basierend diese xDSL-Datenübertragungsgeräte mit den mittels der Managementdaten gewonnenen Information auch ein Abbild der physikalischen Struktur des xDSL-Datenübertragungssystem darstellen können. Durch die jeweils unabhängige Abarbeitung des Zugriffs auf den eingebetteten Betriebskanal ist es ferner grundsätzlich möglich, von jedem solcher xDSL-Datenübertragungsgeräte ausgehend, eine Vielzahl von weiteren xDSL-Datenübertragungsgeräten direkt zu adressieren und nicht lediglich eine Diagnose einzelner xDSL-Übertragungsstrecken basierend auf einer einzelnen Punkt-zu-Punkt-Verbindung gemäß jeweiligen xDSL-Standard durchzuführen.

Das Datenübertragungsverfahren ist hierbei vorzugsweise ein Verfahren zur Datenübertragung innerhalb eines SHDSL-Datenübertragungssystems, insbesondere da dieses sowohl in UP- wie im Downstream die gleichen Datenübertragungsraten bereitstellt.

Die Erfindung schlägt hierzu bevorzugt ein XDSL-Datenübertragungsgerät zur Datenübertragung innerhalb eines xDSL-Datenübertragungssystems, bei welchem zur Übertragung von Nutzdaten über eine, zwischen jeweils zwei benachbart angeordneten xDSL-Datenübertragungsgeräten gebildete xDSL-Übertragungsstrecke jeweils ein xDSL-Datenübertragungsrahmen gemäß einem ersten Protokollstapel genutzt wird und welches aus wenigstens zwei xDSL-Datenübertragungsgeräten aufgebaut ist, die wenigstens zwei Ethernet-Netzwerke an das xDSL-Datenübertragungssystem anbinden, vor, wobei das xDSL-Datenübertragungsgerät vorzugsweise ein SHDSL-Datenübertragungsgerät zur Datenübertragung innerhalb eines SHDSL-Datenübertragungssystems ist.
Ein solches xDSL-Datenübertragungsgerät gemäß der Erfindung, besitzt zusätzlich zu wenigstens einer Ethernet-Schnittstelle zum Anbinden eines Ethernet-Netzwerks an das xDSL-Datenübertragungssystem wenigstens eine mit der wenigstens einen Ethernet-Schnittstelle in Verbindung stehende, an eine xDSL-Übertragungsstrecke angeschaltete Sende-Empfangseinheit, die zur Verarbeitung eines xDSL-Datenübertragungsrahmens gemäß ersten Protokollstapel, innerhalb welchem gemäß dem ersten Protokollstapel zusätzlich zu einem Bereich für Nutzdaten ein eingebetteter Betriebskanal vorgesehen ist, ausgebildet ist sowie basierend auf dieser Verarbeitung zum Weiterleiten von innerhalb des xDSL-Datenübertragungsrahmens gemäß ersten Protokollstapel zu sendenden Nutzdaten an die xDSL-Übertragungsstrecke und/oder von innerhalb des xDSL-Datenübertragungsrahmens gemäß dem ersten Protokollstapel, über die xDSL-Übertragungsstrecke empfangenen Nutzdaten. Ferner besitzt ein solches xDSL-Datenübertragungsgerät eine an die wenigstens eine Sende-Empfangseinheit angeschaltete und mit der wenigstens einen Ethernet-Schnittstelle in Verbindung stehende Prozessoreinheit, wobei der Prozessoreinheit ein zweiter, sich von dem ersten Protokollstapel unterscheidender Protokollstapel zugeordnet ist, demgemäß die Prozessoreinheit angewiesen ist, unabhängig von der Verarbeitung des xDSL-Datenübertragungsrahmens gemäß ersten Protokollstapel einen Zugriff auf den eingebetteten Betriebskanal innerhalb des xDSL-Datenübertragungsgeräts abzuarbeiten, und basierend auf der Abarbeitung gemäß zweitem Protokollstapel Managementdaten zur Diagnose und Konfiguration zumindest des xDSL-Datenübertragungssystems, in den eingebetteten Betriebskanals unabhängig von den Nutzdaten des xDSL-Datenübertragungsrahmen hinzuzufügen, innerhalb diesem zu übertragen und aus diesen auszulesen, wobei durch die jeweils unabhängige Abarbeitung des Zugriffs auf den eingebetteten Betriebskanal, ausgehend von jedem solcher xDSL-Datenübertragungsgeräte, eine Vielzahl von weiteren xDSL-Datenübertragungsgeräten direkt adressierbar ist, Managementdaten des eingebetteten Betriebskanals folglich direkt und unabhängig von den Nutzdaten des xDSL-Datenübertragungsrahmens mit der jeweiligen Prozessoreinheit eines xDSL-Datenübertragungsgerätes ausgetauscht und von diesem verarbeitet, hinzugefügt und weitergeleitet werden, und wobei eine gegebenenfalls durch den jeweiligen Standard festgelegte Beschränkung der Teilnehmeranzahl eines solchen XDSL-Datenübertragungssystems entfällt.

Der eingebettete Betriebskanal (EOC) wird somit mit dem Prozessor verbunden, sodass der Betriebskanal somit entgegen xDSL-Standards im jeweiligen Prozessor eines jeden xDSL-Datenübertragungsgerätes endet und nur noch die rein physikalische Übertragungsmöglich bereitstellt, so dass die gemäß xDSL-Standards vorgesehene Funktion des eingebetteten Betriebskanals (EOC) deaktiviert ist,.

Mit Hilfe der Erfindung können somit beteiligte xDSL-Datenübertragungsgeräte umfangreiche Diagnosen des gesamten xDSL-Übertragungssystems und nicht nur eines einzelnen xDSL-Datenübertragungsgerätes zu Verfügung stellen. Auch können hierdurch z.B. Diagnosen betreffend die Anzahl der an einen jeweiligen Anschluss-Port eines xDSL-Datenübertragungsgerätes angeschalteten weiteren Teilnehmer eines xDSL-Übertragungssystems über das gesamte xDSL-Übertragungssystem hinweg zu Verfügung gestellt werden. Eine gegebenenfalls durch den jeweiligen Standard festgelegte Beschränkung der Teilnehmeranzahl eines solchen Systems entfällt folglich, wie z.B. auch die gemäß SHDSL-Standard beschränkte Teilnehmeranzahl von bis zu maximal 8 Teilnehmern in einem System für die vom Standard fest definierten Diagnosen.

Das erfindungsgemäße Datenübertragungsverfahren zeichnet sich bevorzugt dadurch aus, dass basierend auf der Abarbeitung gemäß zweitem Protokollstapel und in Folge von ausgelesenen Managementdaten des eingebetteten Betriebskanals zur Betreibung einer redundanten Ringstruktur, ein Zugriff eines XDSL-Datenübertragungsgeräts auf eine mit diesem XDSL-Datenübertragungsgerät verbundene xDSL-Übertragungsstrecke in Bezug auf Nutzdaten des xDSL-Datenübertragungsrahmens unterbunden wird, während der Zugriff auf diese xDSL-Übertragungsstrecke in Bezug auf Managementdaten des eingebetteten Betriebskanals weiter aufrecht gehalten wird.

Zweckmäßig besitzt hierzu das xDSL-Datenübertragungsgerät, insbesondere das SHDSL-Datenübertragungsgerät, wenigstens einen innerhalb des Weges zur Weiterleitung von innerhalb des xDSL-Datenübertragungsrahmens gemäß ersten Protokollstapel zu sendenden Nutzdaten an die xDSL-Übertragungsstrecke und/oder von innerhalb des xDSL-Datenübertragungsrahmens gemäß dem ersten Protokollstapel über die xDSL-Übertragungsstrecke empfangenen Nutzdaten physikalisch oder logisch zwischen die wenigstens eine Ethernet-Schnittstelle, die wenigstens eine Sende-Empfangseinheit und die Prozessoreinheit geschalteten Ethernet-Switch, wobei die Prozessoreinheit ausgebildet ist, basierend auf der Abarbeitung gemäß zweitem Protokollstapel und in Folge von ausgelesenen Managementdaten des eingebetteten Betriebskanals zur Betreibung einer redundanten Ringstruktur, den Ethernet-Switch für den Weg zur Weiterleitung für die wenigstens eine Sende-Empfangseinheit zu sperren, während der Zugriff der Prozessoreinheit auf den eingebetteten Betriebskanal innerhalb des xDSL-Datenübertragungsgeräts bei Umgehung des Ethernet-Switchs uneingeschränkt weiter abarbeitbar ist.

Zweckmäßig wird der Ethernet-Switch folglich für die für Nutzdaten zu sperrende xDSL-Verbindung komplett gesperrt und lässt überhaupt keinen Zugriff auf Nutzdaten dieser Strecke mehr zu, auch nicht auf Managementdaten. Die Prozessoreinheit hingegen kann weiterhin vollumfänglich auf die Managementdaten des eingebetteten Betriebskanals zugreifen, insbesondere über ein zweites Interface, z.B. einem Mikroprozessorinterface, das direkt mit einem xDSL-Chip, auf welchem zweckmäßig die wenigstens eine Sende-Empfangseinheit sitzt, verbunden ist. Mit anderen Worten nutzen Managementdaten und Nutzdaten zur Weiterleitung innerhalb eines jeden erfindungsgemäßen xDSL-Datenübertragungsgerätes somit unterschiedliche Schnittstellen.

Hierdurch wird die Realisierung einer Ringredundanz ermöglicht, wobei aufgrund der erfindungsgemäß über den eingebetteten Betriebskanal übertragbaren Managementdaten dies auch unter Berücksichtigung der jeweiligen Qualitäten der xDSL-Übertragungsstrecken erfolgen kann, so dass also einem Ring z.B. immer die schlechteste xDSL-Übertragungsstrecke als Reservestrecke dient.

Zweckmäßig ist ferner zur automatischen Erfassung der Struktur des xDSL-Übertragungssystems vorgesehen, dass basierend auf der Abarbeitung gemäß zweitem Protokollstapel, den Managementdaten vordefinierte Dienste zur Erfassung der physikalischen Struktur des xDSL-Datenübertragungssystems zugeordnet werden sowie Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt werden.

Bevorzugt ist hierzu die Prozessoreinheit des xDSL-Datenübertragungsgeräts ausgebildet, basierend auf der Abarbeitung gemäß zweitem Protokollstapel, hinzuzufügenden Managementdaten vordefinierte Dienste zur Erfassung der physikalischen Struktur des xDSL-Datenübertragungssystems zuzuordnen sowie eine Kennung zur Identifizierung der Lage der Prozessoreinheit als diese Managementdaten hinzufügende Prozessoreinheit innerhalb der physikalischen Struktur des xDSL-Datenübertragungssystems hinzuzufügen.

Ausgehend von den derartigen Kennungen zur Lage-Identifizierung ist folglich auf einfache Weise eine Erfassung der weiteren xDSL-Datenübertragungsgeräte innerhalb des xDSL-Datenübertragungssystems, insbesondere durch jeweilige Inkrementierung und/oder Dekrementierung der Kennungen durch die weiteren xDSL-Datenübertragungsgeräte, möglich, und ob diese in einer Punkt-Punkt-Struktur, einer Linien-Struktur, oder in einem Ring zusammengeschaltet sind.

Zweckmäßig werden ferner auch unter Nutzung der erfassten physikalischen Struktur des xDSL-Datenübertragungssystems und basierend auf der Abarbeitung gemäß zweitem Protokollstapel mittels des erfindungsgemäßen Datenübertragungsverfahrens den Managementdaten vordefinierte Dienste zugeordnet sowie Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems hinzugefügt.

Insbesondere, wenn somit die Prozessoreinheit des xDSL-Datenübertragungsgerät bevorzugt ausgebildet ist, basierend auf der Abarbeitung gemäß zweitem Protokollstapel, den hinzuzufügenden Managementdaten vordefinierte Dienste unter Nutzung der erfassten physikalischen Struktur des xDSL-Datenübertragungssystems zuzuordnen sowie wenigstens eine Kennung zur Identifizierung der Lage eines oder mehrerer zum Auslesen der hinzugefügten Managementdaten bestimmten weiteren xDSL-Datenübertragungsgerätes innerhalb der physikalischen Struktur des xDSL-Datenübertragungssystems hinzuzufügen, ermöglicht die Erfindung folglich, xDSL-Datenübertragungsgeräte allein aufgrund ihrer physikalischen Lage zu adressieren, um z.B. eine bestimmte Diagnose durchzuführen, oder Einstellungen, insbesondere Konfigurationen, an einem bestimmten xDSL-Datenübertragungsgerät vorzunehmen.

Beispielsweise besteht basierend auf einer 1 Byte umfassenden Kennung nunmehr zusätzlich die Möglichkeit, bis zu 255 xDSL-Datenübertragungsgeräte zu adressieren.

In besonders bevorzugter Ausführung der Erfindung, ist somit vorgesehen, zusätzlich zu der wenigstens einen Kennung zur Identifizierung der Lage eines zum Auslesen der hinzugefügten Managementdaten bestimmten weiteren xDSL-Datenübertragungsgerätes innerhalb der physikalischen Struktur des xDSL-Datenübertragungssystems, auch eine Kennung zur Identifizierung der Lage der Prozessoreinheit als hinzufügende Prozessoreinheit innerhalb der physikalischen Struktur des xDSL-Datenübertragungssystems hinzuzufügen.

Hierdurch lassen sich auf einfache Weise Remote-Dienste bereitstellen, um Managementdaten zwischen im Wesentlichen beliebigen xDSL-Datenübertragungsgeräten auszutauschen und, um auch beliebige entfernte xDSL-Datenübertragungsgeräte von im Wesentlichen jedem beliebigen xDSL-Datenübertragungsgeräten ausgehend konfigurieren und parametrieren zu können.

So ist hierzu ferner bevorzugt vorgesehen, eine zu Managementdaten hinzugefügte Kennung zur Identifizierung der Lage einer Prozessoreinheit eines weiteren xDSL-Datenübertragungsgeräts des xDSL-Datenübertragungssystems, welche diese Managementdaten hinzugefügt hat, von jedem daraufhin weiterleitenden xDSL-Datenübertragungsgerät zu inkrementieren und die inkrementierte Kennung wieder diesen Managementdaten zur weiteren Übertragung hinzuzufügen und/oder eine zu Managementdaten hinzugefügte Kennung zur Identifizierung der Lage eines zum Auslesen der jeweiligen Managementdaten bestimmten weiteren xDSL-Datenübertragungsgerätes innerhalb der physikalischen Struktur des xDSL-Datenübertragungssystems von diese Managementdaten weiterleitenden xDSL-Datenübertragungsgeräten zu dekrementieren und die dekrementierte Kennung diesen Managementdaten zur weiteren Übertragung wieder hinzuzufügen. Hierdurch lassen sich insbesondere auch überlagerte Dienste auf effiziente Weise an beliebig entfernte xDSL-Datenübertragungsgeräte weiterleiten sowie gegebenenfalls Quittungen an bestimmte, gleichermaßen beliebig entfernte xDSL-Datenübertragungsgeräte zurücksenden.

Demgemäß sieht die Erfindung folglich auch ein xDSL-Datenübertragungssystem, insbesondere ein SHDSL-Datenübertragungssystem vor, welches eine Vielzahl von erfindungsgemäßen xDSL-Datenübertragungsgeräten umfasst, die wenigstens zwei Ethernet-Netzwerke an das xDSL Datenübertragungssystem anbinden, und welches somit zur Durchführung des erfindungsgemäßen Datenübertragungsverfahrens angepasst ist.

Von Vorteil ist ferner, dass im Rahmen der Erfindung das xDSL-Datenübertragungssystem als Punkt-zu-Punkt-, als Linien- oder als Ringstruktur aufgebaut werden kann, und eine Ringstruktur selbst bei Verwendung ausschließlich passiver xDSL-Datenübertragungsgeräte automatisch erkannt werden kann. Bei einer Ringstruktur kann überdies für die Nutzdatenübertragung eine zu sperrende xDSL-Übertragungsstrecke automatisch unter Berücksichtigung aktueller Diagnosen sämtlicher xDSL-Übertragungsstrecken ermittelt werden. Daher kann vorteilhafter Weise schon vor dem Abbrechen einer kritischen xDSL-Übertragungsstrecke auf eine alternative xDSL-Übertragungsstrecke umgeschaltet werden, wobei zweckmäßig auch passive xDSL-Datenübertragungsgeräte diese Entscheidung treffen können.

Weitere Merkmale und Vorteile ergeben sich aus der nachfolgenden Beschreibung bevorzugter Ausführungsformen unter Bezugnahme auf die Zeichnungen. In den Zeichnungen zeigen:
- Fig.1: ein Beispiel einer Kombination aktiver und passiver xDSL-Datenübertragungsgeräte am Beispiel eines SHDSL-Übertragungssystems nach der Erfindung;

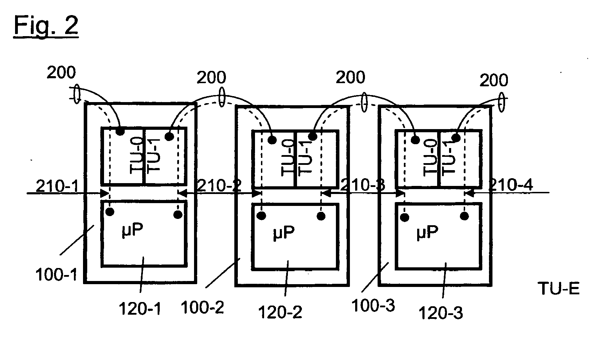

- Fig.2: eine Prinzipskizze von in einer Linie hintereinander geschalteten xDSL-Datenübertragungsgeräten, bei welchen am Beispiel eines SHDSL-Übertragungssystems der eingebettete Betriebskanals (EOC) nach der Erfindung mit dem Prozessor verbunden ist, und der Betriebskanal somit entgegen xDSL-Standards im Prozessor endet;

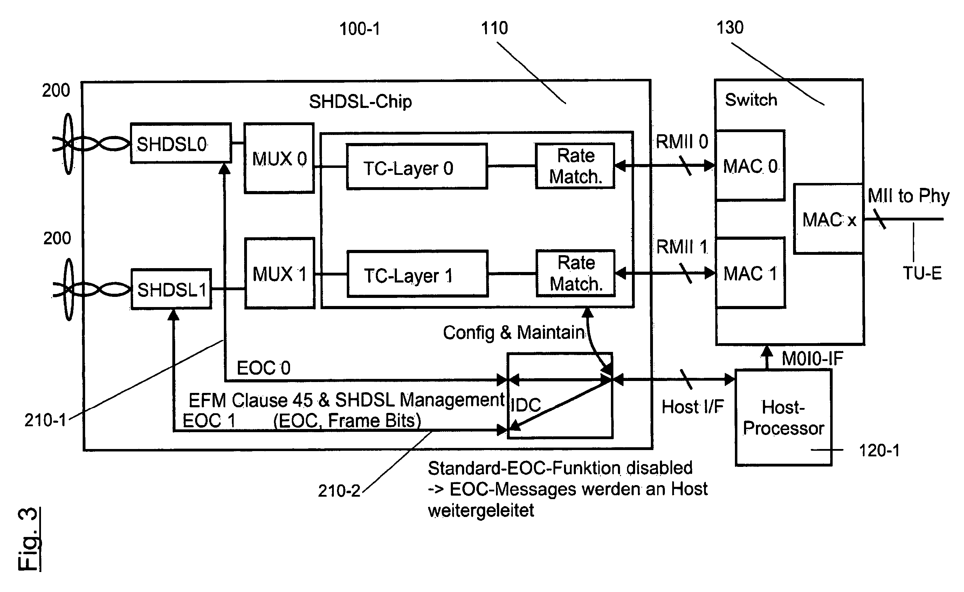

- Fig.3: eine Prinzipskizze eines internen Schnittstellenaufbaus innerhalb eines xDSL-Datenübertragungsgeräts nach der Erfindung am Beispiel eines SHDSL-Datenübertragungsgeräts;

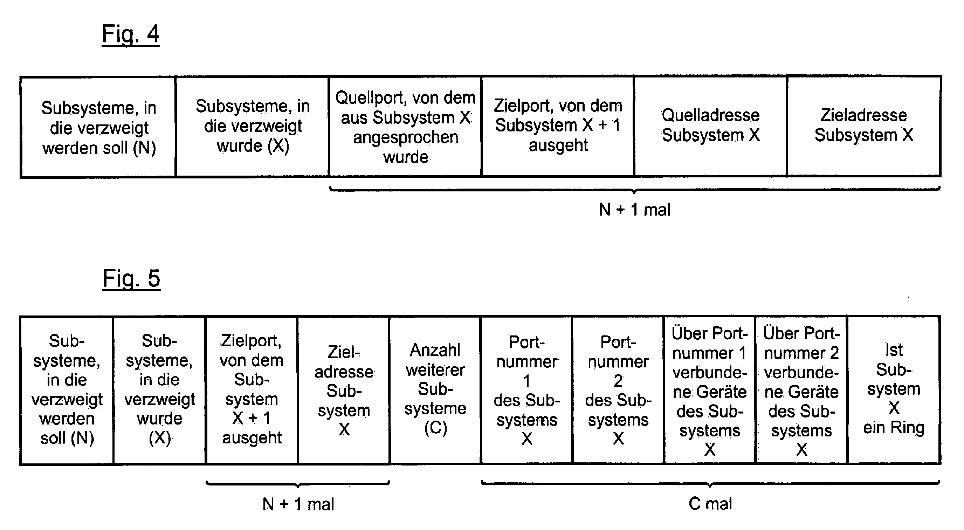

- Fig.4: ein Beispiel einer Struktur eines den Managementdaten zuordenbaren Dienstes nach der Erfindung;
- Fig.5: ein weiteres Beispiel einer Struktur eines den Managementdaten zuordenbaren Dienstes nach der Erfindung;
- Fig.6: ein Beispiel einer Punkt-zu-Punkt-Struktur eines xDSL-Datenübertragungssystems nach der Erfindung;
- Fig.7: ein Beispiel einer Linien-Struktur eines xDSL-Datenübertragungssystems nach der Erfindung;
- Fig.8: ein Beispiel einer Ring-Struktur eines xDSL-Datenübertragungssystems nach der Erfindung; und

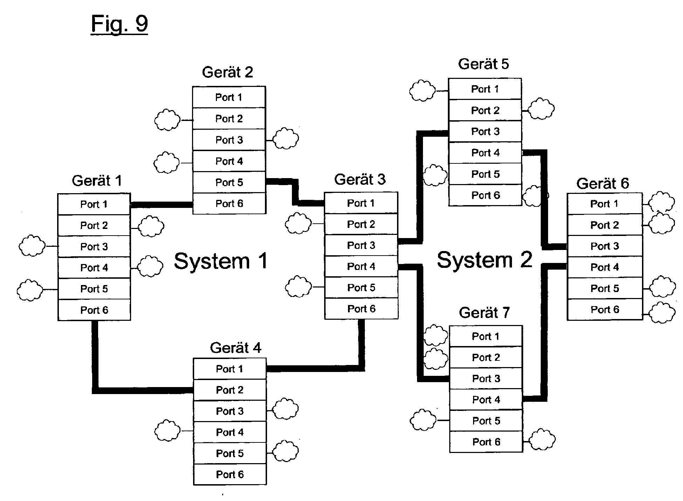

- Fig.9: ein Beispiel einer Kombination zweier Ring-Strukturen eines xDSL-Datenübertragungssystems nach der Erfindung.

Nachfolgend wird die Erfindung anhand bevorzugter Ausführungsformen, beispielhaft basierend auf einer SHDSL-Datenübertragungstechnik, und unter Bezugnahme auf die beigefügten Zeichnungen näher beschrieben, wobei zunächst auf die Figuren 1 bis 3 Bezug genommen wird, und wobei Fig. 1 ein Beispiel einer Kombination aktiver und passiver xDSL-Datenübertragungsgeräte am Beispiel eines SHDSL-Übertragungssystems nach der Erfindung zeigt, Figur 2 eine Prinzipskizze zeigt, von in einer Linie hintereinander geschalteten xDSL-Datenübertragungsgeräten, bei welchen am Beispiel eines SHDSL-Übertragungssystems der eingebettete Betriebskanals (EOC) nach der Erfindung mit dem Prozessor verbunden ist, und der Betriebskanal somit entgegen xDSL-Standards in jedem einzelnen Prozessor eines jeden xDSL-Datenübertragungsgeräts des xDSL-Übertragungssystems endet, und Figur 3 eine Prinzipskizze eines internen Schnittstellenaufbaus innerhalb eines xDSL-Datenübertragungsgeräts nach der Erfindung am Beispiel eines SHDSL-Datenübertragungsgeräts.

Im Einzelnen sind in Figur 1 vier xDSL-Datenübertragungsgeräte 100-1, 100-2, 100-3 und 100-4 zur Datenübertragung innerhalb eines xDSL-Datenübertragungssystems in Linienstruktur stark vereinfacht skizziert. Da, wie erwähnt, das xDSL-Datenübertragungssystem im bevorzugten Beispiel ein SHDSL-Übertragungssystem ist, sind die xDSL-Datenübertragungsgeräte 100-1, 100-2, 100-3 und 100-4 folglich als SHDSL-Datenübertragungsgeräte ausgebildet. Die SHDSL-Datenübertragungsgeräte 100-1, 100-2, 100-3 und 100-4 sind untereinander über verdrillte Aderpaar-Leitungen als Verbindungsleitungen miteinander verbunden, welche jeweilige SHDSL-Übertragungsstrecken zwischen den SHDSL-Datenübertragungsgeräten 100-1, 100-2, 100-3 und 100-4 ausbilden, über welche somit jeweils SHDSL-Signale innerhalb eines dem Standard entsprechenden SHDSL-Datenübertragungsrahmens 200 übertragen werden können. Zwischen dem xDSL-Datenübertragungsgerät 100-1 und einem weiteren, nicht dargestellten SHDSL-Datenübertragungsgerät und zwischen dem SHDSL-Datenübertragungsgerät 100-4 zu einem weiteren, nicht dargestellten SHDSL-Datenübertragungsgerät sind ebenfalls verdrillte Aderpaar-Leitungen als Verbindungsleitungen dargestellt, über welche entsprechend auch derartige SHDSL-Signale innerhalb des dem Standard entsprechenden SHDSL-Datenübertragungsrahmens 200 übertragen werden können.

Zum Empfangen und/oder Senden eines SHDSL-Signals besitzt jedes SHDSL-Datenübertragungsgerät 100-1, 100-2, 100-3 und 100-4 eine mit einer jeweiligen SHDSL-Übertragungsstrecke verbundene Sende-Empfangseinheit, und also wenigstens eine Sende-Empfangseinheit. Gemäß Beispiel nach Fig. 1 besitzt folglich jedes SHDSL-Datenübertragungsgerät jeweils zwei Sende-Empfangseinheiten, welche beispielhaft am SHDSL-Datenübertragungsgerät 100-3 mit TU-0 und TU-1 bezeichnet sind und TU für Transceiver Unit steht.

Grundsätzlich ist gemäß Erfindung das xDSL-Datenübertragungssystem aus wenigstens zwei xDSL-Datenübertragungsgeräten aufgebaut, die wenigstens zwei Ethernet-Netzwerke an das xDSL Datenübertragungssystem, welches folglich zumindest in einer Punkt-zu-Punkt-Struktur aufgebaut ist, anbinden. Hierzu besitzt zumindest jedes xDSL-Datenübertragungsgerät, welches ein Ethernet-Netzwerk anbindet, ferner mindestens eine Ethernet-Schnittstelle, wobei in Figur 1 eine solche beispielhaft am SHDSL-Datenübertragungsgerät 100-3 mit TU-E bezeichnet ist.

Wie ferner der Fig. 1 zu entnehmen, können die dort skizzierten SHDSL-Datenübertragungsgeräte im Rahmen der Erfindung gemäß vorstehender einleitender Beschreibung aktive Datenübertragungsgeräte 100-1 oder passive Datenübertragungsgeräte 100-2, 100-3 und 100-4 sein.

Wie z.B. der Prinzipskizze nach Figur 2 zu entnehmen, bei welcher die Ethernet-Schnittstelle aus Gründen der Übersichtlichkeit nicht skizziert ist, ist innerhalb eines jeden SHDSL-Datenübertragungsrahmen 200 standardgemäß ein eingebetteter Betriebskanal (EOC; Embedded Operation Channel) vorgesehen, der in Figur 2 gestrichelt dargestellt und mit den Bezugszeichen 210-1, 210-2, 201-3 und 210-4 belegt ist.

Jede Sende-Empfangseinheit TU-0 und TU1 ist ferner zur Verarbeitung eines xDSL-Datenübertragungsrahmen 200 gemäß einem ersten, in den Figuren nicht dargestellten Protokollstapel ausgebildet, sowie basierend auf dieser Verarbeitung zum Weiterleiten von innerhalb des xDSL-Datenübertragungsrahmens 200 gemäß ersten Protokollstapel zu sendenden Nutzdaten an die xDSL-Übertragungsstrecke und/oder von innerhalb des xDSL-Datenübertragungsrahmens 200 gemäß dem ersten Protokollstapel über die xDSL-Übertragungsstrecke empfangenen Nutzdaten. Auch gemäß erstem Protokollstapel ist hierzu folglich innerhalb des SHDSL-Datenübertragungsrahmen 200 zusätzlich zu einem Bereich für Nutzdaten ein solcher eingebetteter Betriebskanal 210-1, 210-2, 201-3 und 210-4 vorgesehen.

Ferner besitzt z.B. gemäß Figur 2 jedes erfindungsgemäß ausgebildete SHDSL-Datenübertragungsgerät 100-1, 100-2 bzw. 100-3 eine Prozessoreinheit 120-1, 120-2 bzw. 120-3, der ein zweiter, sich von dem ersten Protokollstapel unterscheidender, jedoch gleichermaßen nicht skizzierter Protokollstapel zugeordnet ist, demgemäß die Prozessoreinheit 120-1, 120-2 oder 120-3 angewiesen ist, unabhängig von der Verarbeitung des xDSL-Datenübertragungsrahmens gemäß ersten Protokollstapel einen Zugriff auf den eingebetteten Betriebskanal 210-1 und 210-2, 210-2 und 210-3 bzw. 210-3 und 210-4 innerhalb des SHDSL-Datenübertragungsgeräts abzuarbeiten, und Managementdaten zur Diagnose und Konfiguration des SHDSL-Datenübertragungssystems, in den eingebetteten Betriebskanal unabhängig von den Nutzdaten des SHDSL-Datenübertragungsrahmen hinzuzufügen, innerhalb diesem zu übertragen und aus diesen auszulesen.

Wie bei Fig. 3 am Beispiel des SHDSL-Datenübertragungsgeräts 100-1 zu sehen, stehen die mindestens eine Ethernet-Schnittstelle TU-E, die wenigstens eine Sende-Empfangseinheit, welche bei Figur 3 zusammengefasst auf einem SHDSL-Chip 110 sitzen und die Prozessoreinheit 120 miteinander in Verbindung.

Der eingebettete Betriebskanal wird somit mit der jeweiligen Prozessoreinheit 120-1, 120-2 oder 120-3 derart verbunden, dass durch die hierdurch bewirkte Anbindung ein physikalischer Kanal in der Prozessoreinheit 120-1, 120-2 oder 120-3 endet und die Nutzung eines eigenen Protokolls gemäß zweiten Protokollstapel zur Übertragung von Managementdaten parallel und unabhängig zu den Nutzdaten ermöglicht, und welches sowohl von aktiven als auch von passiven SHDSL-Datenübertragungsgeräten unterstützt wird.

Mit anderen Worten werden gemäß diesem, sich von dem ersten Protokollstapel unterscheidenden Protokollstapel verarbeitete Managementdaten über den bei xDSL-Datenübertragungssystemen integrierten Kanal (Embedded Operations Channel (EOC-Kanal)) übertragen, der z.B. bei SHDSL-Datenübertragungssystemen eigentlich nur für fest definierte Diagnosen einer Punkt-zu-Punkt-Verbindung, die gemäß Standard gegebenenfalls über bis zu 6 Repeater verfügen kann, vorgesehen ist.

Wie bei Figur 3 zu sehen, wird gemäß Erfindung somit die eigentliche Funktion dieses Kanals deaktiviert, was dazu führt, dass sämtliche Managementdaten, die über diesen Kanal ausgetauscht werden, direkt an die Prozessoreinheit 120-1, insbesondere einen Host-Prozessor des xDSL-Datenübertragungsgeräts weitergeleitet werden. Dieser Kanal ermöglicht es somit z.B., Daten vom Host-Prozessor 120-1 des SHDSL-Datenübertragungsgerätes 100-1 zum Host-Prozessor eines anderen SHDSL-Datenübertragungsgerätes zu übertragen, ohne dass der Prozessor 120-1 einen Zugang zum für die Weiterleitung von Nutzdaten innerhalb des SHDSL-Datenübertragungsgerätes dienenden Interface hat. Im Einzelnen werden gemäß Figur 3 die Managementdaten des EOC-Kanals über das Prozessor-Interface "Host I/F" des SHDSL-Chips 110 übertragen, während der SHDSL-Chip 110 weiterzuleitende Nutzdaten über ein MII-Interface "RMII 0" bzw. "RMII 1" zur Verfügung stellt und/oder zur Verfügung gestellt bekommt.

Da jedes xDSL-Datenübertragungsgerät im Rahmen der Erfindung, egal ob passiv oder aktiv, über ein Prozessorinterface "Host I/F" verfügt, kann der EOC-Kanal somit für die Übertragung von Managementdaten basierend auf dem zweiten, sich von dem ersten Protokollstapel unterscheidenden Protokollstapel genutzt werden.

Um mittels des zweiten Protokollstapels einen redundanten Ring betreiben zu können, sind die xDSL-Datenübertragungsgeräte im Rahmen der Erfindung in der Lage, eine solche zur Weiterleitung von Nutzdaten genutzte Schnittstelle sperren zu können, während die über den EOC-Kanal zu übertragenden Managementdaten weiter über eine hierfür separat genutzte Schnittstelle übertragen werden.

Gemäß der Erfindung besitzen die xDSL-Datenübertragungsgeräte, wie z.B. das SHDSL-Datenübertragungsgerät 100-1 gemäß Fig. 3, hierzu zweckmäßig wenigstens einen innerhalb des Weges zur Weiterleitung von innerhalb des xDSL-Datenübertragungsrahmens gemäß ersten Protokollstapel zu sendenden Nutzdaten an die xDSL-Übertragungsstrecke und/oder von innerhalb des xDSL-Datenübertragungsrahmens gemäß dem ersten Protokollstapel über die xDSL-Übertragungsstrecke empfangenen Nutzdaten physikalisch oder logisch zwischen die Ethernet-Schnittstelle TU-E, die wenigstens eine Sende-Empfangseinheit 110 und die Prozessoreinheit 120-1 geschalteten Ethernet-Switch 130, wobei die Prozessoreinheit 120-1 ausgebildet ist, basierend auf der Abarbeitung gemäß zweitem Protokollstapel und in Folge von ausgelesenen Managementdaten des eingebetteten Betriebskanals zur Betreibung einer redundanten Ringstruktur, den Ethernet-Switch 130 für den Weg zur Weiterleitung von Nutzdaten durch die Sende-Empfangseinheit 110 an eine bzw. von einer mit dieser verbundene xDSL-Übertragungsstrecke und also xDSL-Übertragungsstrecke für die Sende-Empfangseinheit 110 in Bezug auf Nutzdaten des xDSL-Datenübertragungsrahmens 200 zu sperren. Der Ethernet-Switch 130 in Fig.3 ignoriert somit in Folge sämtliche Daten, die ihn über RMII 0 oder über RMII 1 erreichen, während ein Zugriff der Prozessoreinheit 120-1 auf diese xDSL-Übertragungsstrecke in Bezug auf Managementdaten des eingebetteten Betriebskanals bei Umgehung des Ethernet-Switchs weiter uneingeschränkt ermöglicht ist.

Gemäß Struktur nach Fig. 3 verfügen somit die erfindungsgemäß ausgebildeten SHDSL-Datenübertragungsgeräte zweckmäßig über einen Ethernet-Switch 130, der bei jeweils 2 an ein solches SHDSL-Datenübertragungsgerät angebundenen SHDSL-Übertragungsstrecken über mindestens 3 Ports verfügt, um zwei SHDSL-Übertragungsstrecken und mindestens ein Ethernet-Netzwerk anzubinden. Der Host-Prozessor 120-1, der über ein Interface "MDIO-IF" (Management Data Input/Output-InterFace) mit diesem Switch 130 verbunden ist, kann über dieses, zum Managen des Switches 130 dienende Interface "MDIO-IF" den Port, der mit dem zu sperrenden Nutzdateninterface verbunden ist, z.B. den Port "MAC 0" im Falle von in Bezug auf das Nutzdateninterface "RMII 0" zu ignorierende Daten gemäß Figur 3 einfach abschalten. Über das Prozessor-Interface "Host I/F" des SHDSL-Chips 110 ist jedoch weiterhin ein Zugriff der Prozessoreinheit 120-1 auch auf die für die Nutzdaten gesperrte SHDSL-Übertragungsstrecke und also in Bezug auf Managementdaten des eingebetteten Betriebskanals vollumfänglich möglich. Managementdaten, die über den EOC-Kanal übertragen werden, werden somit weiterhin über das Prozessorinterface "Host I/F" des SHDSL-Chips 110 zur Verfügung gestellt.

Bevorzugt ist die Prozessoreinheit 120-1 ferner ausgebildet, basierend auf der Abarbeitung gemäß zweitem Protokollstapel, hinzuzufügenden Managementdaten vordefinierte Dienste zur Erfassung der physikalischen Struktur des xDSL-Datenübertragungssystems zuzuordnen sowie eine Kennung zur Identifizierung der Lage der Prozessoreinheit 120-1 als diese Managementdaten hinzufügende Prozessoreinheit innerhalb der physikalischen Struktur des xDSL-Datenübertragungssystems hinzuzufügen.

Darüber hinaus ist die Prozessoreinheit 120-1 ferner bevorzugt basierend auf der Abarbeitung gemäß zweitem Protokollstapel ausgebildet, unter Nutzung der erfassten physikalischen Struktur des xDSL-Datenübertragungssystems nicht nur hinzuzufügenden Managementdaten vordefinierte Dienste zuzuordnen sondern zusätzlich wenigstens eine Kennung zur Identifizierung der Lage eines oder mehrerer zum Auslesen der hinzugefügten Managementdaten bestimmten weiteren xDSL-Datenübertragungsgerätes innerhalb der physikalischen Struktur des xDSL-Datenübertragungssystems.

Nach Erfassen der physikalischen Struktur des xDSL-Datenübertragungssystems fügt die Prozessoreinheit 120-1 somit bevorzugt zusätzlich zu der wenigstens einen Kennung zur Identifizierung der Lage eines zum Auslesen der hinzugefügten Managementdaten bestimmten weiteren xDSL-Datenübertragungsgerätes innerhalb der physikalischen Struktur des xDSL-Datenübertragungssystems, auch eine Kennung zur Identifizierung der Lage der Prozessoreinheit als hinzufügende Prozessoreinheit innerhalb der physikalischen Struktur des xDSL-Datenübertragungssystems hinzu, wie aus der nachfolgenden Beschreibung ersichtlich wird.

Um basierend auf der Abarbeitung gemäß zweitem Protokollstapel, Managementdaten von einen xDSL-Datenübertragungsgerät, welches diese Managementdaten empfangen hat, an ein weiteres weiterzureichen, ist die Prozessoreinheit 120-1 vorteilhaft ausgebildet, eine zu den Managementdaten hinzugefügte Kennung zur Identifizierung der Lage einer Prozessoreinheit eines weiteren xDSL-Datenübertragungsgerät des xDSL-Datenübertragungssystems, welche diese Managementdaten hinzugefügt hat, zu inkrementieren und die inkrementierte Kennung wieder diesen Managementdaten zur weiteren Übertragung hinzuzufügen und/oder eine Kennung zur Identifizierung der Lage eines zum Auslesen der jeweiligen Managementdaten bestimmten weiteren xDSL-Datenübertragungsgerätes innerhalb der physikalischen Struktur des xDSL-Datenübertragungssystems zu dekrementieren und die dekrementierte Kennung diesen Managementdaten zur weiteren Übertragung wieder hinzuzufügen.

Hierdurch ist in äußerst bevorzugter Weise ein weiterer vorteilhafter Anwendungszweck der Erfindung effizient ermöglicht, denn mit Hilfe bestimmter Dienste kann dann automatisch die physikalische Struktur des xDSL-Datenübertragungssystems erfasst werden und mit Hilfe dieser Struktur ist dann nachfolgend eine Adressierung der erfindungsgemäß angepassten xDSL-Datenübertragungsgeräte anhand der physikalischen Reihenfolge ermöglicht. Diese Dienste zur Strukturerfassung umfassen vorzugsweise Dienste wie "Änderung einer Verbindung detektiert" (LINK_CHANGE_DETECTED", "Verbindung aktiv" (LINK_ALIVE), "Inkrementiere Geräte" (INC_DEVICES) und "Setze Anzahl von Geräten im System" (SET_DEVICES) und z.B. "Bekanntmachung einer Verbindungsdiagnose" (ADVERTISE_LINK_DIAGNOSTICS) vorgesehen sind. Auch wenn die Struktur erfasst ist, enthält jeder dieser Dienste zweckmäßig eine Kennung zur Identifizierung der Lage der diese Managementdaten hinzufügenden Prozessoreinheit innerhalb der physikalischen Struktur des xDSL-Datenübertragungssystems, wobei die Kennung nach Erfassung der Struktur folglich u.a. eine eindeutige Nummer des Absenders sein kann, z.B. eine MAC-Adresse oder eine Seriennummer.

Zweckmäßig sind somit im Rahmen der Erfindung alle xDSL-Datenübertragungsgeräte des xDSL-Datenübertragungssystems in der Lage, eine Veränderung eines Links, d.h. den Aufbau einer Datenverbindung und den Abbau einer Datenverbindung, festzustellen.

Das kann auf verschiedene Weise erfolgen. Beim Ethernet zeigt die Phy (Figur 3) den Zustand eines Links direkt an. An den xDSL-Schnittstellen (bei Figur 3 mit SHDSLO und SHDSL1 bezeichnet), kann der Host-Prozessor in der Regel den Zustand der Übertragungsstrecke über das Prozessor-Interface Host I/F des xDSL-Chips vom xDSL-Chip erfragen.

Alternativ kann der Linkzustand auch über den vorstehend aufgeführten, den Managementdaten zugeordneten Dienst LINK_ALIVE festgestellt werden. Der Dienst wird hierbei zweckmäßig zyklisch mit einem konfigurierbaren Zeitintervall von einem xDSL-Datenübertragungsgerät abgesetzt und vom Nachbargerät unmittelbar quittiert. Bei der bevorzugt vorgesehenen Quittung übergibt das angesprochene xDSL-Datenübertragungsgerät z.B. seine eindeutige Gerätenummer, z.B. die MAC-Adresse. Bleibt die Quittung des Linkpartners über eine gewisse Anzahl von Wiederholungen aus, so ist kein Link vorhanden.

Optional enthält der Dienst auch einen Parameter zur Zeitmessung. Ein Zählerstand kann beim Aussenden des Dienstes als Absendezeitpunkt eingetragen werden. Dieser Zählerstand wird vom xDSL-Datenübertragungsgerät, das diesen Dienst empfängt, einfach in die Quittung des Dienstes kopiert. Der Absender kann folglich über den Vergleich mit dem inzwischen erhöhten Zählerstand eine Information über die Übertragungsdauer erhalten.

Der Dienst LINK_ALIVE wird somit nach einem Aufbau eines Links vorzugsweise mindestens einmal von jedem am Linkaufbau beteiligten xDSL-Datenübertragungsgerät initiiert, um festzustellen, ob ein neu verbundenes xDSL-Datenübertragungsgerät die Protokollabarbeitung gemäß zweiten Protokollstapel unterstützt. Bleibt die Quittung aus, oder entspricht die Quittung nicht der erwarteten Form, so ist davon auszugehen, dass das benachbarte Gerät dieses nicht unterstützt.

Da der weitere bevorzugte Verlauf abhängig von der Struktur des xDSL-Datenübertragungssystems ist, wird dieser nachfolgend anhand von Beispielen erläutert:
Wurde z.B. ein Link zwischen zwei Linien-Strukturen aufgebaut und verbindet dieser Link die beiden Linien-Strukturen zu einer einzigen Linie-Struktur, stellen zunächst gemäß vorstehender Beschreibung beide am Verbindungsaufbau beteiligten xDSL-Datenübertragungsgeräte mit dem Dienst LINK_ALIVE fest, ob der jeweilige Verbindungspartner die Protokollabarbeitung gemäß zweiten Protokollstapel unterstützt. Ist dies der Fall, wird z.B. der Dienst LINK_CHANGE_DETECTED sowohl über den neu aufgebauten Link als auch über den zweiten, bereits aufgebauten Link übertragen. Die Initiierung beider LINK_CHANGE_DETECTED-Dienste übernimmt zweckmäßig die Prozessoreinheit des xDSL-Datenübertragungsgeräts, das die von den beiden am Linkaufbau beteiligten xDSL-Datenübertragungsgeräten größere eindeutige Nummer besitzt, die zuvor mit dem Dienst LINK_ALIVE ausgetauscht wurde. Mehr als zwei Links können bei Strukturen gemäß Figuren 1 und 6 bis 8 nicht an einem einzelnen xDSL-Datenübertragungsgerät beteiligt sein. Der Dienst LINK_CHANGE_DETECTED wird daraufhin von allen, innerhalb der Struktur eingebundenen xDSL-Datenübertragungsgeräte zweckmäßig unverändert weitergeleitet, so lange das möglich ist. Kann der Dienst von einem xDSL-Datenübertragungsgerät nicht mehr weitergeleitet werden, weil kein zweiter Link an diesem existiert, startet es z.B. den Dienst INC_DEVICES auf den Link, über den zuvor der Dienst LINK_CHANGE_DETECTED empfangen wurde. D.h. die xDSL-Datenübertragungsgeräte an beiden Enden einer Linie starten früher oder später den Dienst INC_DEVICES in gegenläufiger Richtung.

Der Dienst INC_DEVICES beinhaltet vorzugsweise die eindeutige Gerätenummer des initiierenden Geräts und zusätzlich einen Parameter, der beim Empfang des Dienstes inkrementiert wird. Bei Initiierung des Dienstes INC_DEVICES wird der Parameter z.B. auf den Wert 1 gesetzt und dann so lange von den xDSL-Datenübertragungsgeräten mit einem jeweils inkrementierten Wert weitergeleitet, bis der Dienst am jeweils anderen Ende der Linie angekommen ist.
Alle xDSL-Datenübertragungsgeräte des xDSL-Datenübertragungssystems merken sich den Parameter vor der Inkrementierung und wissen somit, wie viele xDSL-Datenübertragungsgeräten hinter jeder der beiden angeschlossenen xDSL-Schnittstellen noch folgen. Damit ist grundsätzlich auch schon die Gesamtzahl der am xDSL-Datenübertragungssystem angeschlossenen xDSL-Datenübertragungsgeräte bekannt.

Empfängt ein xDSL-Datenübertragungsgerät, das sich am Ende der Linie befindet, den Dienst INC_DEVICES, so ist diesem xDSL-Datenübertragungsgerät folglich auch die Gesamtzahl der in der Linie befindlichen xDSL-Datenübertragungsgeräte bekannt. Zweckmäßig initiiert dieses xDSL-Datenübertragungsgerät, bzw. dessen Prozessoreinheit basierend auf der Abarbeitung gemäß zweitem Protokollstapel z.B. den Dienst SET_DEVICES, der wieder bis zum anderen Ende der Linie von xDSL-Datenübertragungsgeräte weitergeleitet wird. Dieser Dienst enthält z.B. neben der eindeutigen Gerätenummer u.a. die Gesamtzahl der im System gefundenen xDSL-Datenübertragungsgeräte, um sie allen xDSL-Datenübertragungsgeräten im xDSL-Datenübertragungssystem mitzuteilen.

Hat ein xDSL-Datenübertragungsgerät im xDSL-Datenübertragungssystem auf jeder der beiden Schnittstellen, so wie vorstehend beschrieben, die Dienste INC_DEVICES und SET_DEVICES empfangen, so werden die gespeicherten Werte zweckmäßig noch auf ihre Gültigkeit hin überprüft und erst, wenn die Werte logisch sind, werden sie übernommen und gespeichert. Jedes xDSL-Datenübertragungsgerät der Linie weiß somit, wie viele xDSL-Datenübertragungsgeräte noch hinter jeder der beiden Schnittstellen folgen. Die physikalische Struktur ist damit erfasst.

Anschließend initiieren bevorzugt alle xDSL-Datenübertragungsgeräte nacheinander den Dienst ADVERTISE_LINK_DIAGNOSTICS. Dieser Dienst wird dann von jedem xDSL-Datenübertragungsgerät auf alle Schnittstellen, die mit dem xDSL-Datenübertragungssystem verbunden sind, ausgesendet und von jedem Gerät bis zum Ende der Linie weitergeleitet. Der Dienst ADVERTISE_LINK_DIAGNOSTICS beinhaltet hierzu neben der eindeutigen Gerätenummer des Initiators zweckmäßig ferner die Anzahl der xDSL-Datenübertragungsgeräte, die dem initiierenden xDSL-Datenübertragungsgerät pro Schnittstelle folgen, sowie jeweils eine Nummer, die die mit dem xDSL-Datenübertragungssystem verbundene Schnittstelle bezeichnet. Außerdem beinhaltet auch dieser Dienst zweckmäßig einen Parameter, der bei jeder Weiterleitung inkrementiert wird. Anhand dieser Informationen kann jedes xDSL-Datenübertragungsgerät ermitteln, welchem xDSL-Datenübertragungsgerät des xDSL-Datenübertragungssystems diese zur Diagnose vorgesehenen Managementdaten, die dieser Dienst ebenfalls enthält, zuzuordnen sind. Derartige Managementdaten betreffen z.B. den Datendurchsatz der Schnittstellen des initiierenden xDSL-Datenübertragungsgeräts, Fehlerzähler, oder auch analoge Werte wie z.B. ein Signal-Rausch-Verhältnis oder eine Lichtleistung.

Nachdem alle xDSL-Datenübertragungsgeräte ihre zu dieser Diagnose vorgesehenen Managementdaten zur Verfügung gestellt haben, wird der Dienst ADVERTISE_LINK_DIAGNOSTICS bevorzugt zyklisch oder optional ereignisabhängig von den xDSL-Datenübertragungsgeräten des xDSL-Datenübertragungssystems weiterhin ausgeführt.

Somit ist die physikalische Struktur erfasst, und grundlegende, die Diagnose des gesamten Systems betreffende Daten sind jedem xDSL-Datenübertragungsgerät des xDSL-Datenübertragungssystems bekannt.

Wurde in Abwandlung zu vorstehend beschriebener Linienstruktur ein Link am Ende einer Linienstruktur aufgebaut und verlängert somit die bisher existierende Linie um ein xDSL-Datenübertragungsgerät, so kann der Aufbau prinzipiell analog erfolgen. Hat allerdings das neu verbundene xDSL-Datenübertragungsgerät am Ende der Linienstruktur die größere eindeutige Nummer, so initiiert dieses bevorzugt erst den Dienst LINK_CHANGE_DETECTED und gleich daraufhin den Dienst INC_DEVICES, da es das Ende der Linienstruktur darstellt.

Soll in weiterer Abwandlung zu vorstehend beschriebener Linienstruktur ein neuer Link beide Enden einer Linienstruktur zu einer Ringstruktur verbinden, kann der Aufbau zunächst gemäß vorstehendem Beispiel erfolgen. Nach einer gewissen Zeit treffen aber die Dienste LINK_CHANGE_DETECTED, die das initiierende, d.h. das die entsprechenden Managementdaten hinzufügende xDSL-Datenübertragungsgerät auf beide Schnittstellen gesendet hat, zwangsläufig wieder am initiierenden xDSL-Datenübertragungsgerät ein. Das Gerät erkennt anhand der eindeutigen Nummer des Dienst-Initiators, die ein Parameter des Dienstes ist, dass es selbst den Dienst gestartet hat und somit ein Ring vorliegen muss. Daraufhin initiiert dieses initiierende xDSL-Datenübertragungsgerät z.B. den Dienst RING_DETECTED auf beiden Schnittstellen. Dieser Dienst wird unverändert von allen weiteren xDSL-Datenübertragungsgeräten des xDSL-Datenübertragungssystems weitergeleitet, um allen diesen Geräten dieses Systems mitzuteilen, dass ein Ring vorliegt. Auch dieser Dienst enthält zweckmäßig die eindeutige Nummer des Initiators, so dass das initiierende xDSL-Datenübertragungsgerät erkennt, dass es den Dienst nicht noch einmal weiterleitet, wenn es den Dienst auf der jeweils anderen Schnittstelle wieder empfängt.

Hat das xDSL-Datenübertragungsgerät, das den Ring wie oben beschrieben, festgestellt hat, den Dienst RING_DETECTED auf jeder der beiden Schnittstellen wieder empfangen, startet es wie auch in einer Linienstruktur den Dienst INC_DEVICES auf jeder der beiden Schnittstellen. D.h. das xDSL-Datenübertragungsgerät, das den Ring festgestellt hat, verhält sich auf jeder am System angeschlossenen Schnittstelle zunächst wie ein Endgerät einer Linie. Es initiiert nach dem Empfang der INC_DEVICES-Dienste auch den Dienst SET_DEVICES auf jeder der beiden Schnittstellen. Alle xDSL-Datenübertragungsgeräte des xDSL-Datenübertragungssystems wissen also, dass ein Ring vorliegt, wie viele xDSL-Datenübertragungsgeräte im Ring vorhanden sind, und wie weit es bis zu dem xDSL-Datenübertragungsgerät ist, das den Ring festgestellt hat.

Dann allerdings sperrt bevorzugt das xDSL-Datenübertragungsgerät, das den Ring festgestellt hat, die neu aufgebaute Verbindung zunächst am eigenen Gerät für die Nutzdatenübertragung, indem es z.B., wie vorstehend beschrieben, den entsprechenden Port eines Ethernet-Switches in den Status "blocked" setzt, und sendet z.B. einen Dienst "blockiere Verbindung" (BLOCK_LINK) über den gerade für die Nutzdatenübertragung gesperrten Link. Der Dienst BLOCK_LINK enthält bevorzugt einen Parameter zur Adressierung des zum Auslesen dieser Managementdaten bestimmten weiteren xDSL-Datenübertragungsgerätes, der bei jeder Weiterleitung des Dienstes dekrementiert wird. Hat dieser Parameter den Wert 0 erreicht, so ist dieses xDSL-Datenübertragungsgerät adressiert und sperrt daraufhin denjenigen Link für die Nutzdatenübertragung, über den das adressierte xDSL-Datenübertragungsgerät diesen Dienst empfangen hat. Dieser Parameter wird hier vom initiierenden xDSL-Datenübertragungsgerät also auf 1 gesetzt, um das Nachbargerät zu adressieren und es dazu zu veranlassen, ebenfalls den Link für die Nutzdatenübertragung zu sperren.

Wie auch in einer Linie initiieren zweckmäßig nach und nach alle xDSL-Datenübertragungsgeräte den Dienst ADVERTISE_LINK_DIAGNOSTICS, um allen xDSL-Datenübertragungsgeräten im xDSL-Datenübertragungssystem ihre Link-Diagnosen zur Verfügung zu stellen. Auch hierbei verhält sich zweckmäßig das xDSL-Datenübertragungsgerät, das die vorherigen Dienste zur Erkennung der Systemstruktur initiiert hat, wie ein Endgerät einer Linie.

Sind genug Diagnoseinformationen vorhanden, führt zweckmäßiger Weise das xDSL-Datenübertragungsgerät, welches den Ring festgestellt hat, zyklisch eine Bewertung aller xDSL-Übertragungsstrecken des Systems aus. Findet es dabei eine wesentlich schlechtere xDSL-Übertragungsstrecke im Ring als diejenige, die für die Nutzdatenübertragung gesperrt wurde, so initiiert es bevorzugt den Dienst BLOCK_LINK an jedes der beiden an der kritischen xDSL-Übertragungsstrecke angeschlossenen xDSL-Datenübertragungsgeräte über den entsprechenden Link. Unmittelbar danach wird der Dienst ACTIVATE_LINK an das Nachbargerät geschickt, um den zuvor für die Nutzdatenübertragung gesperrten Link wieder freizugeben. ACTIVATE_LINK enthält vorzugsweise wie BLOCK_LINK einen Parameter, der bei der Weiterleitung über Geräte dekrementiert wird, und der somit ein Gerät korrekt adressiert, wenn es den Wert 0 erreicht.

Eine Umschaltung auf eine alternative xDSL-Übertragungsstrecke ist z.B. aufgrund eines größeren Datendurchsatzes, eines besseren Signal/Rausch-Verhältnisses oder größeren Empfangsleistung, einer größeren Amplitude des Empfangssignals usw. möglich, sofern die xDSL-Datenübertragungsgeräte des xDSL-Datenübertragungssystems diese Diagnosewerte zur Verfügung stellen.

Sobald ein Link einer xDSL-Übertragungsstrecke abbricht, senden vorzugsweise beide xDSL-Datenübertragungsgeräte, die den Linkabbruch feststellen, z.B. anhand einer ausbleibenden Quittung eines zyklischen LINK_ALIVE-Dienstes oder anhand eines aus einer zu einem Ethernet-Netzwerk gehörenden Phy ausgelesenen Wertes, ein LINK_CHANGE_DETECTED über den noch bestehenden Link. Wie beim Linkaufbau wird dieser Dienst über alle xDSL-Datenübertragungsgeräte des Systems weitergeleitet. Empfängt ein xDSL-Datenübertragungsgerät, dessen Schnittstelle für die Nutzdatenübertragung gesperrt ist, diesen Dienst von einer beliebigen Schnittstelle, so gibt dessen Prozessoreinheit die gesperrte Schnittstelle über den mit dieser in Verbindung stehenden Ethernet-Switch sofort wieder zur Nutzdatenübertragung frei.

Die restliche Erkennung der Systemstruktur erfolgt ähnlich wie in den vorstehend beschriebenen Beispielen einer Linienstruktur, allerdings treffen die Dienste INC_DEVICES und SET_DEVICES pro Schnittstelle zweimal ein.

Wurde ferner eine Linie wie z.B. in den vorstehend beschriebenen Beispielen einer Linienstruktur aufgebaut, und fällt ein Link innerhalb dieser Linie aus, so zerfällt das xDSL-Datenübertragungssystem in zwei Linien. Die sich neu ergebende Struktur wird zweckmäßig folgendermaßen erkannt:
Beide am ausgefallenen Link beteiligten xDSL-Datenübertragungsgeräte senden z.B. den Dienst LINK_CHANGE_DETECTED über den zweiten jeweils noch mit einem benachbarten xDSL-Datenübertragungsgerät verbundenen Link. Daraufhin starten diese beiden xDSL-Datenübertragungssystems jeweils den Dienst INC_DEVICES. Trifft der Dienst LINK_CHANGE_DETECTED am anderen Ende einer Linie auf, so wird auch dort der Dienst INC_DEVICES initiiert. Der weitere Verlauf ist dann wiederum entsprechend zu vorstehend beschriebenen Beispielen einer Linienstruktur.

Ferner ist in äußerst bevorzugter Weise ein weiterer vorteilhafter Anwendungszweck der Erfindung effizient ermöglicht, indem ein den Managementdaten zugeordneter, z.B. als "Tunnelnachricht" (TNL_MSG) bezeichneter Dienst einen Tunnel zur Verfügung stellen kann, über den auch Daten eines überlagerten Protokolls, wie z.B. klassische AT-Kommandos, mit Hilfe einer Adresse auf ein beliebiges entferntes xDSL-Datenübertragungsgerät weitergeleitet werden kann. Die Adresse setzt sich aus der Angabe der Verbindung zusammen, über die die überlagerten Protokolldaten weitergeleitet werden soll, und die Angabe der Anzahl der xDSL-Datenübertragungsgeräte, die die Protokolldaten in Richtung dieser Verbindung durchlaufen soll. Wie die maximal mögliche Anzahl adressierbarer Geräte pro Verbindung ermittelt wird, ergibt sich aus den oben aufgeführten Beispielen. Werden die Protokolldaten über ein Gerät weitergeleitet, wird der Adressparameter dekrementiert. Erreicht der Adressparameter den Wert 0, so ist das xDSL-Datenübertragungsgerät, das den Dienst empfangen hat, als das zum Auslesen bestimmte xDSL-Datenübertragungsgerät korrekt adressiert.

Zusätzlich zur Adresse enthält der Dienst TNL_MSG vorzugsweise ferner einen Parameter, der beim Weiterleiten inkrementiert wird. So erhält das adressierte Gerät auch die Information, wohin es eventuelle Quittungen des überlagerten Protokolls zurücksenden muss.

Somit ist es möglich, dass ein aktives xDSL-Datenübertragungsgerät z.B. auf einer Web-Seite den kompletten physikalischen Aufbau des xDSL-Datenübertragungssystems inklusive der passiven xDSL-Datenübertragungsgeräte darstellen kann. Mit Hilfe des TNL_MSG- Dienstes ist es dem aktiven xDSL-Datenübertragungsgerät dann auch möglich, die Diagnose beliebiger, auch passiver, xDSL-Datenübertragungsgeräte darzustellen oder auch eine Konfiguration dieser xDSL-Datenübertragungsgeräte vorzunehmen. Sollte ein passives xDSL-Datenübertragungsgerät z.B. über eine serielle Schnittstelle verfügen, so ist es aber auch möglich, von einem lokal mit dem Rechner verbundenen passiven xDSL-Datenübertragungsgerät aus andere xDSL-Datenübertragungsgeräte des xDSL-Datenübertragungssystems zu diagnostizieren oder zu konfigurieren, d.h. von einem passiven xDSL-Datenübertragungsgerät aus wäre z.B. auch die Konfiguration eines aktiven xDSL-Datenübertragungsgeräts möglich.

Ferner kann z.B. ein zusätzlich Dienst "Alarm anzeigen" (ADVERTISE_ALRM) vorgesehen sein, um kritische Zustände eines xDSL-Datenübertragungsgerätes allen xDSL-Datenübertragungsgeräten im xDSL-Datenübertragungssystem bekannt zu machen, bzw. auch das Verschwinden eines kritischen Zustands bekannt zu machen, ohne dass die xDSL-Datenübertragungsgeräte nicht erst über Tunnel-Dienste gepollt werden müssen, um einen kritischen Zustand festzustellen.

Basierend auf der vorstehenden Beschreibung ist ersichtlich, dass mit Hilfe der erfindungsgemäß ausgebildeten xDSL-Datenübertragungsgeräte und basierend auf der Abarbeitung und je nach Ausbildung des zweiten Protokollstapels derartige Diagnosen z.B. an den Endgeräten einer Linie auch nur für einen Port unterstützt werden können oder auch umfangreiche Diagnosen betreffend die Anzahl der an einen jeweiligen Anschluss-Port eines xDSL-Datenübertragungsgerätes angeschalteten weiteren Teilnehmer eines Ethernet-Netzwerkes über das gesamte xDSL-Übertragungssystems hinweg zu Verfügung gestellt werden können.

Liegt z.B. eine Struktur ähnlich zu Figur. 9 vor, d.h. dass mehrere xDSL-Übertragungssysteme über ein xDSL-Datenübertragungsgerät verbunden sind, ermöglichen erfindungsgemäß ausgebildete xDSL-Datenübertragungsgeräte oder erfindungsgemäße xDSL-Datenübertragungssysteme mit einer Vielzahl von derartig ausgebildeten xDSL-Datenübertragungsgeräten basierend auf der Abarbeitung und je nach Ausbildung des zweiten Protokollstapels von einem xDSL-Datenübertragungssystem aus auch auf weitere xDSL-Datenübertragungssysteme zuzugreifen. Somit können auch komplexe Systeme mit vielen Verzweigungen zentral diagnostiziert werden.

Dazu ist vorgesehen, dass die xDSL-Datenübertragungsgeräte zunächst anzeigen, ob weitere Verzweigungen von ihnen ausgehen. Dies wird z.B. mit dem Dienst "erhalte Untersysteme" (GET_SUBSYSTEMS) ermöglicht. Eine mögliche Struktur eines solchen, den Managementdaten zuordenbaren Dienstes, der eine diesbezügliche Anfrage (Request) startet ist in Figur 4 wiedergegeben.
Demgemäß enthält der anfragende Dienst GET_SUBSYSTEMS z.B. einen Parameter, der die Anzahl N von Subsystemen angibt, in die verzweigt werden soll, die Anzahl X von Subsystemen, in die bereits verzweigt wurde, sowie für jedes Subsystem die Angabe einer Zieladresse und einer Quelladresse. Außerdem enthält der Dienst für jedes Subsystem eine Angabe, von welchem Port aus der Dienst von einem xDSL-Datenübertragungsgerät in das entsprechende Subsystem weitergeleitet wurde (Quellport), und auf welchen Port die Weiterleitung des Dienstes zu erfolgen hat (Zielport).

Eine mögliche Struktur eines solchen, den Managementdaten zuordenbaren Dienstes, der eine diesbezügliche Antwort (Response) liefert, ist in Figur 5 wiedergegeben.

Demgemäß liefert der Response des Dienstes zurück, wie viele Subsysteme vom angesprochenen xDSL-Datenübertragungsgerät aus folgen, wie viele xDSL-Datenübertragungsgeräte hinter jedem Port jeden Subsystems folgen, und ob ggf. ein Ring im entsprechenden Subsystem vorliegt. Damit der Response wieder zurück zum Initiator des Requests geleitet werden kann, ist weiterhin eine Angabe der Anzahl der Subsysteme erforderlich, in die der Response verzweigt werden soll, sowie eine Angabe, in wie viele Subsysteme der Response bereits verzweigt wurde. Weiterhin ist pro Subsystem eine xDSL-Datenübertragungsgeräte-Zieladresse angegeben und eine Portnummer, über den das adressierte xDSL-Datenübertragungsgerät den Response ins nächste Subsystem weiterleitet.

Soll eine gesamte verzweigte Struktur erfasst werden, muss nach und nach jedes erkannte xDSL-Datenübertragungsgerät abfragt werden, und also aktiv dieser Dienst angestoßen werden. Um auf die entfernten xDSL-Datenübertragungsgeräte zugreifen zu können, ist jedoch zweckmäßig auch der Dienst TNL_MSG um die Adressierungsmöglichkeiten des GET_SUBSYSTEMS-Dienstes erweitert.

Wenn z.B. basierend auf einer Struktur nach Fig. 9 das als Gerät 1 dargestellte xDSL-Datenübertragungsgerät den Dienst an das als Gerät 3 dargestellte xDSL-Datenübertragungsgerät absetzen möchte, um ggf. weitere von Gerät 3 ausgehende Systeme zu ermitteln, wäre die Anzahl von Subsysteme, in die verzweigt werden soll, Null, da sich beide xDSL-Datenübertragungsgeräte innerhalb eines Systems befinden. Gerät 1 initiiert den Dienst, also ist die Anzahl von Subsystemen, in die bereits verzweigt wurde, ebenfalls 0. Die Angabe einer Quell-Portnummer, von wo aus ein weiterleitendes Subsystem angesprochen wurde, ist in diesem Beispiel irrelevant und wird auf 0 gesetzt. Der Zielport, über den der Dienst weiterzuleiten ist, ist in diesem Beispiel ebenfalls irrelevant und wird auf 0 gesetzt.

Gerät 1 würde den Dienst GET_SUBSYSTEMS also z.B. über Port 1 absetzen, die Anzahl in der zu verzweigenden Subsysteme wäre 0, die Anzahl der Systeme, in die bereits verzweigt wurde, ist ebenfalls 0, die Quelladresse wäre zunächst 0 (sie wird beim Weiterleiten inkrementiert), und die Zieladresse wäre 2. Gerät 2 würde den Dienst über Port 6 empfangen und zunächst die Anzahl der Subsysteme, in die bereits verzweigt wurde, auswerten. Diese ist 0, d.h. die ersten Quell- und Zieladressen des Dienstes sind vom Gerät auszuwerten. Gerät 2 inkrementiert die Quelladresse zu 1 und dekrementiert die Zieladresse zu 1. Da die Zieladresse noch nicht 0 erreicht hat, erkennt Gerät 2, dass es nicht adressiert wurde, und reicht den so modifizierten Dienst über Port 5 weiter. Gerät 3 empfängt den Dienst über Port 1. Die Anzahl der Subsysteme, in die bereits verzweigt wurde, beträgt 0. D.h. auch Gerät 3 wertet die ersten Quell- und Zieladressen aus. Es inkrementiert die Quelladresse zu 2 und dekrementiert die Zieladresse zu 0. Das Gerät fühlt sich nun angesprochen und wertet die Anzahl von Subsystemen aus, in die zu verzweigen ist. Diese ist ebenfalls 0, d.h. Gerät 3 leitet den Dienst nicht an ein weiteres Subsystem weiter und antwortet selbst:
Die Subsysteme, in die der Response weitergeleitet werden soll, ist identisch mit der Anzahl der Subsysteme, in die der Request weitergeleitet wurde, d.h. 0. Die Anzahl der Subsysteme, in die der Response bereits weitergeleitet wurde, ist natürlich ebenfalls 0. Da sich der Response an ein Gerät im eigenen System richtet, ist die Angabe der Portnummer des nächsten Systems irrelevant und wäre ebenfalls 0. Die Zieladresse des Geräts wird der inkrementierten Quelladresse entnommen, ist also 2.

Die Anzahl weiterer von Gerät 3 ausgehenden Systeme beträgt 1, Die erste Portnummer des folgenden Subsystems ist 3, die zweite Portnummer des folgenden Subsystems ist 4, die Anzahl der über Port 3 verbundenen Geräte beträgt wie die Anzahl der über Port 4 verbundenen Geräte 3. Da dieses Subsystem als Ring aufgebaut ist, wird in einem weiteren Parameter ein entsprechendes Flag gesetzt. Dann wird der Response über den Link geschickt, über den der Request empfangen wurde.

Wenn z.B. basierend auf einer Struktur nach Fig. 9 das als Gerät 1 dargestellte xDSL-Datenübertragungsgerät den Dienst GET_SUBSYSTEMS über Gerät 3 an das als Gerät 5 dargestellte xDSL-Datenübertragungsgerät absetzen möchte, um ggf. weitere von Gerät 5 ausgehende Systeme zu ermitteln, ist die Anzahl von Subsystemen, in die verzweigt werden soll, eins. Gerät 1 initiiert den Dienst, also ist die Anzahl von Subsystemen, in die bereits verzweigt wurde, 0. Die Angabe der ersten Quell-Portnummer, von wo aus ein weiterleitendes Subsystem angesprochen wurde, ist zunächst irrelevant und wird auf 0 gesetzt. Der erste Zielport, über den der Dienst weiterzuleiten ist, wäre hier Port 3, d.h. Gerät 3 soll den Dienst über Port 3 an Gerät 5 weiterleiten. Die erste Zieladresse wäre die des Geräts 3, also 2. Die zweite Quell-Portnummer bleibt ebenfalls irrelevant und wird auf 0 gesetzt. Der zweite Zielport ist ebenfalls irrelevant und wird auf 0 gesetzt. Die zweite Zieladresse ist 1. Sie bezeichnet die Anzahl von Geräten, wenn der Dienst über den ersten Zielport des Geräts 3, hier 3, weitergeleitet wird. Gerät 1 würde den Dienst GET_SUBSYSTEMS also über Port 1 absetzen. Gerät 2 würde den Dienst empfangen und zunächst die Anzahl der Subsysteme, in die bereits verzweigt wurde, auswerten. Diese ist 0, d.h. die ersten Quell- und Zieladressen des Dienstes sind vom Gerät auszuwerten. Gerät 2 inkrementiert die erste Quelladresse zu 1 und dekrementiert die erste Zieladresse zu 1. Da die Zieladresse noch nicht 0 erreicht hat, erkennt Gerät 2, dass es nicht adressiert wurde, und reicht den so modifizierten Dienst über Port 5 weiter. Gerät 3 empfängt den Dienst über Port 1. Die Anzahl der Subsysteme, in die bereits verzweigt wurde, beträgt 0. D.h. auch Gerät 3 wertet die ersten Quell- und Zieladressen aus. Es inkrementiert die Quelladresse zu 2 und dekrementiert die Zieladresse zu 0. Das Gerät fühlt sich nun angesprochen und wertet die Anzahl von Subsystemen aus, in die zu verzweigen ist. Diese ist 1, während die Anzahl der Subsysteme, in die bereits verzweigt wurde, 0 ist. Gerät 3 inkrementiert also die Anzahl der Subsysteme auf 1. Als zweiten Quellport, d.h. den Port, über den das Subsystem 1 angesprochen wurde, trägt Gerät 3 den Port 1 ein, weil es den Dienst von diesem Port empfangen hat. Nun leitet Gerät 3 den Dienst über den Port, der durch die erste Zieladresse definiert ist, d.h. hier Port 3, weiter. Gerät 5 empfängt den Dienst dann über Port 3. Es wertet nun die zweiten Zieladressen und Quelladressen aus, d.h. die Quelladresse wird inkrementiert und die Zieladresse dekrementiert. Gerät 5 erhält als zweite Zieladresse nach dekrementieren den Wert 0 und wird damit angesprochen. Gerät 5 stellt fest, dass die Anzahl der Subsysteme, in die verzweigt werden soll, der Anzahl der Subsysteme entspricht, in die bereits verzweigt wurde. D.h. Gerät 5 initiiert jetzt den Response.

Anhand des Requests und anhand seiner Systeminformationen kann Gerät 5 folgende Parameter für den Response ermitteln:
- Subsysteme, in die verzweigt werden soll (Response) = Subsysteme, in die verzweigt werden soll (Request)
- Subsysteme, in die bereits verzweigt wurde: 0 (Initiierung des Responses)
- Erster Zielport, von dem das nächste Subsystem ausgeht (Response) = letzter eingetragener Quellport aus dem Request. Den hatte im Beispiel Gerät 3 vor der Weiterleitung ins nächste Subsystem eingetragen (Port 1)
- Zieladresse des ersten Subsystems (Response)= Quelladresse des letzten Subsystems (Request) = 1
- Zweiter Zielport, von dem das nächste Subsystem ausgeht (Response) = vorletzter eingetragener Quellport aus dem Request. Der zweite Zielport aus dem Beispiel ist wie der vorletzte Quellport des Beispiels irrelevant, da keine weitere Weiterleitung in weitere Systeme erfolgt.
- Zieladresse des zweiten Subsystems (Response) = Quelladresse des vorletzten Subsystems (Request) = 2
- Anzahl weiterer Subsysteme: Die ist 0, da von Gerät 5 aus keine weiteren Subsysteme ausgehen. Daher erübrigen sich alle weiteren Parameter des Responses.

Mit diesen Parametern findet der Response mit seinen Daten in analoger Weise wieder zum Absender des Requests zurück.

Zusammenfassend ist somit mit der Erfindung ein Datenübertragungsverfahren zur Datenübertragung innerhalb eines xDSL-Datenübertragungssystems, welches aus wenigstens zwei xDSL-Datenübertragungsgeräten aufgebaut ist, die wenigstens zwei Ethernet-Netzwerke an das xDSL Datenübertragungssystem anbinden, an die Hand gegeben, bei welchem zur Übertragung von Nutzdaten über eine, zwischen jeweils zwei benachbart angeordneten xDSL-Datenübertragungsgeräten gebildete xDSL-Übertragungsstrecke jeweils ein xDSL-Datenübertragungsrahmen gemäß einem ersten Protokollstapel genutzt wird, innerhalb welchem gemäß dem ersten Protokollstapel zusätzlich ein eingebetteter Betriebskanal vorgesehen ist, sowie ein zweiter, sich von dem ersten Protokollstapel unterscheidender Protokollstapel vorgesehen wird, demgemäß ein Zugriff auf den eingebetteten Betriebskanal innerhalb eines xDSL-Datenübertragungsgeräts abgearbeitet wird, und Managementdaten zur Diagnose und Konfiguration des xDSL-Datenübertragungssystems, in den eingebetteten Betriebskanals unabhängig von den Nutzdaten des xDSL-Datenübertragungsrahmen hinzugefügt, innerhalb diesem übertragen und aus diesen ausgelesen werden.

Basierend auf der Abarbeitung gemäß zweitem Protokollstapel und in Folge von ausgelesenen Managementdaten des eingebetteten Betriebskanals zur Betreibung einer redundanten Ringstruktur, wird zweckmäßig ein Zugriff eines xDSL-Datenübertragungsgeräts auf eine mit diesem xDSL-Datenübertragungsgerät verbundene xDSL-Übertragungsstrecke in Bezug auf Nutzdaten des xDSL-Datenübertragungsrahmens unterbunden, während der Zugriff auf diese xDSL-Übertragungsstrecke in Bezug auf Managementdaten des eingebetteten Betriebskanals weiter aufrechtgehalten wird.

Ferner werden basierend auf der Abarbeitung gemäß zweitem Protokollstapel den Managementdaten in bevorzugter weise vordefinierte Dienste zur Erfassung der physikalischen Struktur des xDSL-Datenübertragungssystems zugeordnet sowie Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt, wobei vorzugsweise ferner basierend auf der Abarbeitung gemäß zweitem Protokollstapel den Managementdaten weitere vordefinierte Dienste unter Nutzung der erfassten physikalischen Struktur des xDSL-Datenübertragungssystems zugeordnet werden sowie Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems hinzugefügt werden.

In besonders bevorzugter Ausführung werden demgemäß zusätzlich zu den Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems auch Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt.

Darüber hinaus werden gemäß ergänzender oder alternativer Weiterbildung ferner basierend auf der Abarbeitung gemäß zweitem Protokollstapel den Managementdaten Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt, welche beim Weiterleiten der jeweiligen Managementdaten durch ein xDSL-Datenübertragungsgerät inkrementiert werden und/oder Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems hinzugefügt, welche beim Weiterleiten der jeweiligen Managementdaten durch ein xDSL-Datenübertragungsgerät dekrementiert werden.

Insbesondere im Falle eines SHDSL-Übertragungssystems leiten erfindungsgemäße xDSL-Datenübertragungsgeräte, welche das Protokoll gemäß zweitem, sich vom ersten Protokollstapel unterscheidenden Protokollstapel unterstützen, somit nicht, wie bei aktiven Netzwerkteilnehmern nach dem Stand der Technik üblich, Managementdaten über einen an einen SHDSL-Chips angeschalteten Ethernet-Switch, sondern über ein Prozessorinterface des SHDSL-Chips, welches dazu führt, dass die Prozessoreinheit hierfür keine Schnittstelle zu dem Ethernet-Switch, z.B. eine MAC, benötigt.

Die Nutzdaten werden somit über ein zum Ethernet-Switch führendes Interface, z.B. RMII, übertragen. Managementdaten werden hingegen über das Prozessorinterface ausgetauscht, so dass den Ethernet-Switch überhaupt keine Managementdaten, sondern ausschließlich Nutzdaten erreichen. Wird ein Port des Ethernet-Switches für alle Daten gesperrt, so werden die Managementdaten weiterhin über das Prozessorinterface übertragen.

Die Prozessoreinheiten nach der Erfindung benötigen somit insbesondere auch keine Ethernet-Schnittstellen mehr.

## Patentansprüche

1. Datenübertragungsverfahren zur Datenübertragung innerhalb eines xDSL-Datenübertragungssystems, welches aus wenigstens zwei xDSL-Datenübertragungsgeräten (100-1, 100-2, 100-3, 100-4) aufgebaut ist, die wenigstens zwei Ethernet-Netzwerke an das xDSL Datenübertragungssystem anbinden,
wobei zur Übertragung von Nutzdaten über eine, zwischen jeweils zwei benachbart angeordneten xDSL-Datenübertragungsgeräten gebildete xDSL-Übertragungsstrecke jeweils ein xDSL-Datenübertragungsrahmen (200) gemäß einem ersten Protokollstapel genutzt wird, innerhalb welchem gemäß dem ersten Protokollstapel zusätzlich ein eingebetteter Betriebskanal (210-1, 210-2, 210-3, 210-4) vorgesehen ist,
**dadurch gekennzeichnet,**
**dass** ein zweiter, sich von dem ersten Protokollstapel unterscheidender Protokollstapel vorgesehen wird, demgemäß ein Zugriff auf den eingebetteten Betriebskanal innerhalb eines xDSL-Datenübertragungsgeräts unabhängig von einem Zugriff auf die Nutzdaten abgearbeitet wird, und in Folge Managementdaten zur Diagnose und Konfiguration des xDSL-Datenübertragungssystems, in den eingebetteten Betriebskanal unabhängig von den Nutzdaten des xDSL-Datenübertragungsrahmens hinzufügt, innerhalb diesem übertragen und aus diesen ausgelesen werden,
wobei durch die jeweils unabhängige Abarbeitung des Zugriffs auf den eingebetteten Betriebskanal ausgehend von jedem solcher xDSL-Datenübertragungsgeräte eine Vielzahl von weiteren xDSL-Datenübertragungsgeräten direkt adressierbar ist,
wobei eine gegebenenfalls durch den jeweiligen xDSL-Standard festgelegte Beschränkung der Teilnehmerzahl eines solchen xDSL-Datenübertragungssystems entfällt.

2. Datenübertragungsverfahren nach Anspruch 1, **dadurch gekennzeichnet, dass** basierend auf der Abarbeitung gemäß zweitem Protokollstapel und in Folge von ausgelesenen Managementdaten des eingebetteten Betriebskanals zur Betreibung einer redundanten Ringstruktur,
ein Zugriff eines xDSL-Datenübertragungsgeräts auf eine mit diesem xDSL-Datenübertragungsgerät verbundene xDSL-Übertragungsstrecke in Bezug auf Nutzdaten des xDSL-Datenübertragungsrahmens unterbunden wird, während der Zugriff auf diese xDSL-Übertragungsstrecke in Bezug auf Managementdaten des eingebetteten Betriebskanals weiter aufrechtgehalten wird.

3. Datenübertragungsverfahren nach Anspruch 1 oder 2, **dadurch gekennzeichnet, dass** basierend auf der Abarbeitung gemäß zweitem Protokollstapel,
den Managementdaten vordefinierte Dienste zur Erfassung der physikalischen Struktur des xDSL-Datenübertragungssystems zugeordnet werden sowie Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt werden.

4. Datenübertragungsverfahren nach Anspruch 3, **dadurch gekennzeichnet, dass** basierend auf der Abarbeitung gemäß zweitem Protokollstapel den Managementdaten, vordefinierte Dienste unter Nutzung der erfassten physikalischen Struktur des xDSL-Datenübertragungssystems zugeordnet werden sowie Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems hinzugefügt werden.

5. Datenübertragungsverfahren nach Anspruch 4, **dadurch gekennzeichnet, dass** zusätzlich zu den Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems auch Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt werden.

6. Datenübertragungsverfahren nach einem der Ansprüche 1 bis 5, **dadurch gekennzeichnet, dass** basierend auf der Abarbeitung gemäß zweitem Protokollstapel den Managementdaten Kennungen zur Identifizierung der Lage des die jeweiligen Managementdaten hinzufügenden xDSL-Datenübertragungsgerätes innerhalb der physikalischen Struktur des xDSL-Datenübertragungssystems hinzugefügt werden, welche beim Weiterleiten der jeweiligen Managementdaten durch ein xDSL-Datenübertragungsgerät inkrementiert werden und/oder Kennungen zur Identifizierung der Lage eines zum Auslesen der jeweiligen Managementdaten bestimmten xDSL-Datenübertragungsgerätes innerhalb der physikalischen Struktur des xDSL-Datenübertragungssystems hinzugefügt werden, welche beim Weiterleiten der jeweiligen Managementdaten durch ein xDSL-Datenübertragungsgerät dekrementiert werden.

7. xDSL-Datenübertragungsgerät (100-1, 100-2, 100-3, 100-4) zur Datenübertragung innerhalb eines xDSL-Datenübertragungssystems, bei welchem zur Übertragung von Nutzdaten über eine, zwischen jeweils zwei benachbart angeordneten xDSL-Datenübertragungsgeräten gebildete xDSL-Übertragungsstrecke jeweils ein xDSL-Datenübertragungsrahmen (200) gemäß einem ersten Protokollstapel genutzt wird und welches aus wenigstens zwei xDSL-Datenübertragungsgeräten aufgebaut ist, die wenigstens zwei Ethernet-Netzwerke an das xDSL Datenübertragungssystem anbinden, umfassend:
wenigstens eine Ethernet-Schnittstelle (TU-E) zum Anbinden wenigstens eines Ethernet-Netzwerks und wenigstens eine mit der wenigstens einen Ethernet-Schnittstelle in Verbindung stehende, an eine xDSL-Übertragungsstrecke angeschaltete Sende-Empfangseinheit (TU-0, TU-1) zur Verarbeitung eines xDSL-Datenübertragungsrahmens gemäß ersten Protokollstapel, innerhalb welchem gemäß dem ersten Protokollstapel zusätzlich zu einem Bereich für die Nutzdaten ein eingebetteter Betriebskanal (210-1, 210-2, 210-3, 210-4) vorgesehen ist, sowie basierend auf dieser Verarbeitung zum Weiterleiten von innerhalb des xDSL-Datenübertragungsrahmens gemäß ersten Protokollstapel zu sendenden Nutzdaten an die xDSL-Übertragungsstrecke und/oder von innerhalb des xDSL-Datenübertragungsrahmens gemäß dem ersten Protokollstapel über die xDSL-Übertragungsstrecke empfangenen Nutzdaten, und
eine an die wenigstens eine Sende-Empfangseinheit angeschaltete und mit der wenigstens einen Ethernet-Schnittstelle in Verbindung stehende Prozessoreinheit (120-1, 120-2, 120-3),
**dadurch gekennzeichnet,**
**dass** der Prozessoreinheit ein zweiter, sich von dem ersten Protokollstapel unterscheidender Protokollstapel zugeordnet ist, demgemäß die Prozessoreinheit angewiesen ist, unabhängig von der Verarbeitung des xDSL-Datenübertragungsrahmens gemäß ersten Protokollstapel einen Zugriff auf den eingebetteten Betriebskanal innerhalb des xDSL-Datenübertragungsgeräts abzuarbeiten, und basierend auf der Abarbeitung gemäß zweitem Protokollstapel Managementdaten zur Diagnose und Konfiguration des xDSL-Datenübertragungssystems, in den eingebetteten Betriebskanals unabhängig von den Nutzdaten des xDSL-Datenübertragungsrahmens hinzuzufügen, innerhalb diesem zu übertragen und aus diesen auszulesen,
wobei durch die jeweils unabhängige Abarbeitung des Zugriffs auf den eingebetteten Betriebskanal ausgehend von jedem solcher xDSL-Datenübertragungsgeräte eine Vielzahl von weiteren xDSL-Datenübertragungsgeräten direkt adressierbar ist,
wobei Managementdaten des eingebetteten Betriebskanals folglich direkt und unabhängig von den Nutzdaten des xDSL-Datenübertragungsrahmens mit der jeweiligen Prozessoreinheit eines xDSL-Datenübertragungsgerätes ausgetauscht und von dieser verarbeitet, hinzugefügt und weitergeleitet werden,
wobei eine gegebenenfalls durch den jeweiligen xDSL-Standard festgelegte Beschränkung der Teilnehmerzahl eines solchen xDSL-Datenübertragungssystems entfällt.

8. xDSL-Datenübertragungsgerät nach Anspruch 7, **gekennzeichnet durch** einen innerhalb des Weges zur Weiterleitung von innerhalb des xDSL-Datenübertragungsrahmens gemäß ersten Protokollstapel zu zusendenden Nutzdaten an die xDSL-Übertragungsstrecke und/oder von innerhalb des xDSL-Datenübertragungsrahmens gemäß dem ersten Protokollstapel über die xDSL-Übertragungsstrecke empfangenen Nutzdaten physikalisch oder logisch zwischen die wenigstens eine Ethernet-Schnittstelle, die wenigstens eine Sende-Empfangseinheit und die Prozessoreinheit geschalteten Ethernet-Switch, wobei die Prozessoreinheit ausgebildet ist, basierend auf der Abarbeitung gemäß zweitem Protokollstapel und in Folge von ausgelesenen Managementdaten des eingebetteten Betriebskanals zur Betreibung einer redundanten Ringstruktur,
den Ethernet-Switch für den Weg zur Weiterleitung gemäß ersten Protokollstapel für die wenigstens eine Sende-Empfangseinheit zu sperren, während der Zugriff der Prozessoreinheit auf den eingebetteten Betriebskanal innerhalb des xDSL-Datenübertragungsgeräts bei Umgehung des Ethernet-Switchs uneingeschränkt weiter abarbeitbar ist.

9. xDSL-Datenübertragungsgerät nach Anspruch 7 oder 8, **dadurch gekennzeichnet, dass** die Prozessoreinheit ausgebildet ist, basierend auf der Abarbeitung gemäß zweitem Protokollstapel, hinzuzufügenden Managementdaten vordefinierte Dienste zur Erfassung der physikalischen Struktur des xDSL-Datenübertragungssystems zuzuordnen sowie eine Kennung zur Identifizierung der Lage der Prozessoreinheit als diese Managementdaten hinzufügende Prozessoreinheit innerhalb der physikalischen Struktur des xDSL-Datenübertragungssystems hinzuzufügen.

10. xDSL-Datenübertragungsgerät nach Anspruch 9, **dadurch gekennzeichnet, dass** die Prozessoreinheit ausgebildet ist, basierend auf der Abarbeitung gemäß zweitem Protokollstapel, den hinzuzufügenden Managementdaten vordefinierte Dienste unter Nutzung der erfassten physikalischen Struktur des xDSL-Datenübertragungssystems zuzuordnen sowie wenigstens eine Kennung zur Identifizierung der Lage eines oder mehrerer zum Auslesen der hinzugefügten Managementdaten bestimmten weiteren xDSL-Datenübertragungsgeräte innerhalb der physikalischen Struktur des xDSL-Datenübertragungssystems hinzuzufügen.

11. xDSL-Datenübertragungsgerät nach Anspruch 10, **dadurch gekennzeichnet, dass** die Prozessoreinheit ausgebildet ist, zusätzlich zu der wenigstens einen Kennung zur Identifizierung der Lage eines zum Auslesen der hinzugefügten Managementdaten bestimmten weiteren xDSL-Datenübertragungsgeräte innerhalb der physikalischen Struktur des xDSL-Datenübertragungssystems, auch eine Kennung zur Identifizierung der Lage der Prozessoreinheit als hinzufügende Prozessoreinheit innerhalb der physikalischen Struktur des xDSL-Datenübertragungssystems hinzuzufügen.

12. xDSL-Datenübertragungsgerät nach einem der Ansprüche 7 bis 11, **dadurch gekennzeichnet, dass** die Prozessoreinheit ausgebildet ist, basierend auf der Abarbeitung gemäß zweitem Protokollstapel, eine zu Managementdaten hinzugefügte Kennung zur Identifizierung der Lage einer Prozessoreinheit eines weiteren xDSL-Datenübertragungsgeräts des xDSL-Datenübertragungssystems, welche diese Managementdaten hinzugefügt hat zu inkrementieren und die inkrementierte Kennung wieder diese Managementdaten zur weiteren Übertragung hinzuzufügen und/oder eine Kennung zur Identifizierung der Lage eines zum Auslesen der jeweiligen Managementdaten bestimmten weiteren xDSL-Datenübertragungsgerätes innerhalb der physikalischen Struktur des xDSL-Datenübertragungssystems zu dekrementieren und die dekrementierte Kennung diese Managementdaten zur weiteren Übertragung wieder hinzuzufügen.

13. xDSL-Datenübertragungssystem umfassend eine Vielzahl von xDSL-Datenübertragungsgeräten nach einem der Ansprüche 7 bis 11, die wenigstens zwei Ethernet-Netzwerke an das xDSL-Datenübertragungssystem anbinden, insbesondere zur Durchführung eines Datenübertragungsverfahrens nach einem der Ansprüche 1 bis 6.

## Claims

1. A data transmission method for transmitting data within an xDSL data transmission system which comprises at least two xDSL data transmission devices (100-1, 100-2, 100-3, 100-4) connecting at least two Ethernet networks to the xDSL data transmission system, wherein
a respective xDSL data transmission frame (200) according to a first protocol stack is used for transmitting payload data via a transmission link provided between two adjacent xDSL data transmission devices, in which additionally an embedded operations channel (210-1, 210-2, 210-3, 210-4) is provided according to the first protocol stack,
**characterized in**
**that** a second protocol stack different from the first protocol stack is provided according to which an access to the embedded operations channel within an xDSL data transmission device is executed independently of any access to the payload data; and
subsequently adding management data for diagnostics and configuration of the xDSL data transmission system to the embedded operations channel independently of the payload data of the xDSL data transmission frame, transferring them therein, and reading them out therefrom, wherein
due to the respective independent execution of access to the embedded operations channel to directly address a plurality of other xDSL data transmission devices from each such xDSL data transmission device,
wherein a restriction of the number of participants of such a xDSL data transmission system as it may be specified by the relevant xDSL-standard will be eliminated.

2. The data transmission method as claimed in claim 1, **characterized in that** based on the execution according to the second protocol stack and in response to management data read from the embedded operations channel for operating a redundant ring configuration,
blocking access of an xDSL data transmission device to an xDSL transmission link connected with this xDSL data transmission device with respect to payload data of the xDSL data transmission frame, while maintaining access to said xDSL transmission link with respect to management data of the embedded operations channel.

3. The data transmission method as claimed in claim 1 or 2, **characterized in that** based on the execution according to the second protocol stack,
assigning predefined services for detecting the physical configuration of the xDSL data transmission system to the management data, and
adding identifiers for identifying the location within the physical configuration of the xDSL data transmission system of the xDSL data transmission device that adds the respective management data.

4. The data transmission method as claimed in claim 3, **characterized in that** based on the execution according to the second protocol stack,
assigning predefined services to the management data using the detected physical configuration of the xDSL data transmission system, and
adding identifiers for identifying the location within the physical configuration of the xDSL data transmission system of an xDSL data transmission device intended for reading out the respective management data.

5. The data transmission method as claimed in claim 4, **characterized in that** in addition to the identifiers for identifying the location within the physical configuration of the xDSL data transmission system of an xDSL data transmission device intended for reading out the respective management data,
adding identifiers for identifying the location within the physical configuration of the xDSL data transmission system of the xDSL data transmission device that adds the respective management data.

6. The data transmission method as claimed in any of claims 1 to 5, **characterized in that** based on the execution according to the second protocol stack,
adding, to the respective management data, identifiers for identifying the location within the physical configuration of the xDSL data transmission system of the xDSL data transmission device which adds the respective management data, which identifiers are incremented by an xDSL data transmission device when forwarding the respective management data, and/or
adding identifiers for identifying the location within the physical configuration of the xDSL data transmission system of an xDSL data transmission device intended for reading out the respective management data, which identifiers are decremented by an xDSL data transmission device when forwarding the respective management data.

7. An xDSL data transmission device (100-1, 100-2, 100-3, 100-4) for data transmission within an xDSL data transmission system, wherein for transmitting payload data via an xDSL transmission link formed between two adjacent xDSL data transmission devices, a respective xDSL data transmission frame (200) according to a first protocol stack is used, and which comprises at least two xDSL data transmission devices which connect at least two Ethernet networks to the xDSL data transmission system, comprising:
at least one Ethernet interface (TU-E) for connecting at least one Ethernet network, and at least one transceiver unit (TU-0, TU-1) connected to an xDSL transmission link and communicating with the at least one Ethernet interface for processing an xDSL data transmission frame according to the first protocol stack, in which in addition to a region for the payload data an embedded operations channel (210-1, 210-2, 210-3, 210-4) is provided according to the first protocol stack, and based on this processing for forwarding payload data within the xDSL data transmission frame according to the first protocol stack to the xDSL transmission link and/or payload data received via the xDSL transmission link within the xDSL data transmission frame in accordance with the first protocol stack; and
a processor unit (120-1, 120-2, 120-3) connected to the at least one transceiver unit and communicating with the at least one Ethernet interface,
**characterized in**
**that** the processor unit has associated therewith a second protocol stack different from the first protocol stack, according to which the processor unit is instructed to execute an access to the embedded operations channel within the xDSL data transmission device independently of the processing of the xDSL data transmission frame according to the first protocol stack, and based on the execution according to the second protocol stack, to add management data for diagnostics and configuration of the xDSL data transmission system to the embedded operations channel independently of the payload data of the xDSL data transmission frame, to transfer them therein, and to read them out therefrom, wherein
due to the respective independent execution of access to the embedded operations channel to directly address a plurality of other xDSL data transmission devices from each such xDSL data transmission device,
wherein as a consequence management data of the embedded operations channel are exchanged directly and independently of the payload data of the XDSL data transmission frame with the respective processor of an xDSL data transmission device, and are processed, added and forwarded by this processor,
wherein a restriction of the number of participants of such a xDSL data transmission system as it may be specified by the relevant standard is eliminated.

8. The xDSL data transmission device as claimed in claim 7, **characterized in that** an Ethernet switch physically or logically connected between the at least one Ethernet interface, the at least one transceiver unit and the processor unit within the path for forwarding the payload data to be transmitted within the xDSL data transmission frame according to the first protocol stack to the xDSL transmission link and/or the payload data received from the xDSL transmission link within the xDSL data transmission frame according to the first protocol stack, wherein the processor unit is adapted to block the Ethernet switch for the path for forwarding according to the first protocol stack for the at least one transceiver unit based on the execution according to the second protocol stack and in response to management data read from the embedded operations channel for operating a redundant ring configuration, while access of the processor unit to the embedded operations channel within the xDSL data transmission device continues to be fully executable by bypassing the Ethernet switch.

9. The xDSL data transmission device as claimed in claim 7 or 8, wherein the processor unit is adapted, based on the execution according to the second protocol stack, to assign predefined services for detecting the physical configuration of the xDSL data transmission system to the management data to be added, and to add an identifier for identifying the location within the physical configuration of the xDSL data transmission system of the processor unit as that processor unit which adds these management data.

10. The xDSL data transmission device as claimed in claim 9, wherein the processor unit is adapted, based on the execution according to the second protocol stack, to assign predefined services to the management data to be added using the physical configuration of the xDSL data transmission system detected, and to add at least one identifier for identifying the location within the physical configuration of the xDSL data transmission system of one or more xDSL data transmission device(s) intended for reading out the added management data.

11. The xDSL data transmission device as claimed in claim 10, wherein the processor unit is adapted to add, in addition to the at least one identifier for identifying the location within the physical configuration of the xDSL data transmission system of an xDSL data transmission device intended for reading out the added management data, an identifier for identifying the location within the physical configuration of the xDSL data transmission system of the processor unit being the adding processor unit.

12. The xDSL data transmission device as claimed in any of claims 7 to 11, wherein the processor unit is adapted, based on the execution according to the second protocol stack, to increment an identifier that had been added to the management data for identifying the location of a processor unit of another xDSL data transmission device of the xDSL data transmission system which added these management data, and to reinsert the incremented identifier into the management data for being forwarded, and/or to decrement an identifier for identifying the location within the physical configuration of the xDSL data transmission system of another xDSL data transmission device intended for reading out the respective management data, and to reinsert the decremented identifier into the management data for being forwarded.

13. An xDSL data transmission system, comprising a plurality of xDSL data transmission devices according to any of claims 7 to 11, which connect at least two Ethernet networks to the xDSL data transmission system, in particular for performing a method according to any of claims 1 to 6.

## Revendications

1. Procédé de transmission de données permettant la transmission de données à l'intérieur d'un système de transmission de données xDSL, lequel est composé d'au moins deux appareils de transmission de données xDSL (100-1, 100-2, 100-3, 100-4), qui relient au moins deux réseaux Ethernet au système de transmission de données xDSL, respectivement une trame de transmission de données xDSL (200), à l'intérieur de laquelle est prévu en plus un canal d'exploitation intégré (210-1, 210-2, 210-3, 210-4) conformément à une première pile de protocoles, étant utilisée conformément à une première pile de protocoles pour transmettre des données utiles sur toute l'étendue d'une ligne de transmission xDSL formée entre respectivement deux appareils de transmission de données xDSL adjacents,
**caractérisé en ce que** :
une deuxième pile de protocoles différente de la première pile de protocoles est prévue, selon laquelle un accès au canal d'exploitation intégré à l'intérieur d'un appareil de transmission de données xDSL est exécuté indépendamment d'un accès aux données utiles, et en conséquence des données de gestion permettant le diagnostic et la configuration du système de transmission de données xDSL sont ajoutées dans le canal d'exploitation intégré indépendamment des données utiles de la trame de transmission de données xDSL, transmises à l'intérieur de cette dernière et consultées dans cette dernière, l'exécution respectivement indépendante de l'accès au canal d'exploitation intégré à partir de chacun des appareils de transmission de données xDSL de ce type permettant l'adressage direct d'une pluralité d'autres appareils de transmission de données xDSL,
une limitation du nombre de participants d'un système de transmission de données xDSL de ce type, définie le cas échéant par la norme xDSL respective, n'étant plus nécessaire.

2. Procédé de transmission de données selon la revendication 1, **caractérisé en ce que**, sur la base de l'exécution conformément à la deuxième pile de protocoles et en raison des données de gestion consultées du canal d'exploitation intégré permettant d'exploiter une structure annulaire redondante,
un accès d'un appareil de transmission de données xDSL à une ligne de transmission xDSL reliée à cet appareil de transmission de données xDSL, en ce qui concerne les données utiles de la trame de transmission de données xDSL, est empêché, tandis que l'accès à cette ligne de transmission de données xDSL, en ce qui concerne les gestions de données du canal d'exploitation intégré, continue d'être maintenu.

3. Procédé de transmission de données selon la revendication 1 ou 2, **caractérisé en ce que**, sur la base de l'exécution conformément à la deuxième pile de protocoles, des services prédéfinis permettant de détecter la structure physique du système de transmission de données xDSL sont affectés aux données de gestion et des identifiants permettant d'identifier la position de l'appareil de transmission de données xDSL ajoutant les données de gestion respectives sont ajoutés à l'intérieur de la structure physique du système de transmission de données xDSL.

4. Procédé de transmission de données selon la revendication 3, **caractérisé en ce que**, sur la base de l'exécution conformément à la deuxième pile de protocoles, des services prédéfinis, en utilisant la structure physique détectée du système de transmission de données xDSL, sont affectés aux données de gestion et des identifiants permettant d'identifier la position d'un appareil de transmission de données xDSL conçu pour consulter les données de gestion respectives sont ajoutés à l'intérieur de la structure physique du système de transmission de données xDSL.

5. Procédé de transmission de données selon la revendication 4, **caractérisé en ce qu'**en plus des identifiants permettant d'identifier la position d'un appareil de transmission de données xDSL conçu pour consulter les données de gestion respectives à l'intérieur de la structure physique du système de transmission de données xDSL, des identifiants permettant d'identifier la position de l'appareil de transmission de données xDSL ajoutant les données de gestion respectives sont ajoutés à l'intérieur de la structure physique du système de transmission de données xDSL.

6. Procédé de transmission de données selon l'une quelconque des revendications 1 à 5, **caractérisé en ce que**, sur la base de l'exécution conformément à la deuxième pile de protocoles, des identifiants permettant d'identifier la position de l'appareil de transmission de données xDSL ajoutant les données de gestion respectives à l'intérieur de la structure physique du système de transmission de données xDSL sont ajoutés aux gestions de données, lesquels identifiants, lors de la transmission des données de gestion respectives par un appareil de transmission de données xDSL, sont incrémentés et/ou les identifiants permettant d'identifier la position d'un appareil de transmission de données xDSL conçu pour consulter les données de gestion respectives sont ajoutés à l'intérieur de la structure physique du système de transmission de données xDSL, lesquels identifiants sont décrémentés lors de la transmission des données de gestion respectives par un appareil de transmission de données xDSL.

7. Appareil de transmission de données xDSL (100-1, 100-2, 100-3, 100-4) permettant de transmettre des données à l'intérieur d'un système de transmission de données xDSL, avec lequel, pour la transmission de données utiles sur toute l'étendue d'une ligne de transmission de données xDSL formée entre respectivement deux appareils de transmission de données xDSL adjacents, respectivement une trame de transmission de données xDSL (200) est utilisée conformément à une première pile de protocoles, et laquelle est composée d'au moins deux appareils de transmission de données xDSL, qui relient au moins deux réseaux Ethernet au système de transmission de données xDSL, comprenant :
au moins une interface Ethernet (TU-E) destinée à relier au moins un réseau Ethernet et au moins une unité émettrice-réceptrice (TU-0, TU-1) raccordée à l'au moins une interface Ethernet et connectée à une ligne de transmission de données xDSL et pour le traitement d'une trame de transmission de données xDSL conformément à la première pile de protocoles, à l'intérieur de laquelle conformément à la première pile de protocoles, en plus d'une zone pour les données utiles, un canal d'exploitation intégré (210-1, 210-2, 210-3, 210-4) est prévu, et, sur la base de ce traitement, à transmettre les données utiles, destinées à être envoyées à l'intérieur de la trame de transmission de données xDSL conformément à la première pile de protocoles à la ligne de transmission de données xDSL et/ou les données utiles reçues à l'intérieur de la trame de transmission de données xDSL conformément à la première pile de protocoles sur toute l'étendue de la ligne de transmission de données xDSL, et
une unité centrale (120-1, 120-2, 120-3) raccordée à l'au moins une interface Ethernet et connectée à l'au moins une unité émettrice-réceptrice,
**caractérisé en ce que** :
une deuxième pile de protocoles différente de la première pile de protocoles est affectée à l'unité centrale, deuxième pile selon laquelle l'unité centrale est chargée, indépendamment du traitement de la trame de transmission de données xDSL conformément à la première pile de protocoles, d'exécuter un accès au canal d'exploitation intégré à l'intérieur de l'appareil de transmission de données xDSL, et, sur la base de l'exécution conformément à la deuxième pile de protocoles, d'ajouter les données de gestion permettant le diagnostic et la configuration du système de transmission de données xDSL dans le canal d'exploitation intégré indépendamment des données utiles de la trame de transmission de données xDSL, de les transmettre à l'intérieur de cette dernière et de les consulter dans cette dernière, l'exécution respectivement indépendante de l'accès au canal d'exploitation intégré à partir de chacun des appareils de transmission de données xDSL de ce type permettant l'adressage direct d'une pluralité d'autres appareils de transmission de données xDSL,
les données de gestion du canal d'exploitation intégré étant par conséquent échangées directement et indépendamment des données utiles de la trame de transmission de données xDSL avec l'unité centrale respective d'un appareil de transmission de données xDSL et traitées, ajoutées et transmises par cette dernière,
une limitation du nombre de participants d'un système de transmission de données xDSL de ce type, définie le cas échéant par la norme xDSL respective, n'étant plus nécessaire.

8. Appareil de transmission de données xDSL selon la revendication 7, **caractérisé par** un commutateur Ethernet monté à l'intérieur de la voie servant à la transmission de données utile, destinées à être envoyées à l'intérieur de la trame de transmission de données xDSL conformément à la première pile de protocoles, à la ligne de transmission de données xDSL, et/ou de données utiles reçues à l'intérieur de la trame de transmission de données xDSL conformément à la première pile de protocoles sur toute l'étendue de la ligne de transmission de données xDSL, de manière physique ou logique, entre l'au moins une interface Ethernet, l'au moins une unité émettrice-réceptrice et l'unité centrale, l'unité centrale étant conçue, sur la base de l'exécution conformément à la deuxième pile de protocoles et en raison des données de gestion consultées du canal d'exploitation intégré permettant d'exploiter une structure annulaire redondante, pour verrouiller le commutateur Ethernet pour la voie de transmission conformément à la première pile de protocoles pour l'au moins une unité émettrice-réceptrice, tandis que l'accès de l'unité centrale au canal d'exploitation intégré à l'intérieur de l'appareil de transmission de données xDSL peut continuer d'être exécuté de façon illimitée dans le cas du contournement du commutateur Ethernet.

9. Appareil de transmission de données xDSL selon la revendication 7 ou 8, **caractérisé en ce que** l'unité centrale est conçue, sur la base de l'exécution conformément à la deuxième pile de protocoles, pour affecter des services prédéfinis permettant de détecter la structure physique du système de transmission de données xDSL aux données de gestion destinées à être ajoutées, ainsi que pour ajouter un identifiant, permettant d'identifier la position de l'unité centrale utilisée comme unité centrale ajoutant ces données de gestion, à l'intérieur de la structure physique du système de transmission de données xDSL.

10. Appareil de transmission de données xDSL selon la revendication 9, **caractérisé en ce que** l'unité centrale est conçue, sur la base de l'exécution conformément à la deuxième pile de protocoles, pour affecter des services prédéfinis, en utilisant la structure physique détectée du système de transmission de données xDSL, aux données de gestion destinées à être ajoutées, ainsi que pour ajouter au moins un identifiant, permettant d'identifier la position d'un ou plusieurs autres appareils de transmission de données xDSL conçus pour consulter les données de gestion ajoutées, à l'intérieur de la structure physique du système de transmission de données xDSL.

11. Appareil de transmission de données xDSL selon la revendication 10, **caractérisé en ce que** l'unité centrale est conçue pour ajouter, en plus de l'au moins un identifiant permettant d'identifier la position d'un autre appareil de transmission de données xDSL conçu pour consulter les données de gestion ajoutées, à l'intérieur de la structure physique du système de transmission de données xDSL, un identifiant permettant d'identifier la position de l'unité centrale utilisée comme unité centrale réalisant l'ajout, à l'intérieur de la structure physique du système de transmission de données xDSL.

12. Appareil de transmission de données xDSL selon l'une quelconque des revendications 7 à 11, **caractérisé en ce que** l'unité centrale est conçue, sur la base de l'exécution conformément à la deuxième pile de protocoles, pour incrémenter un identifiant ajouté aux données de gestion permettant d'identifier la position d'une unité centrale d'un autre appareil de transmission de données xDSL du système de transmission de données xDSL, lequel a ajouté ces données de gestion, et pour ajouter à nouveau l'identifiant incrémenté à ces données de gestion en vue d'un traitement ultérieur et/ou pour décrémenter un identifiant permettant d'identifier la position d'un autre appareil de transmission de données xDSL conçu pour consulter les données de gestion respectives à l'intérieur de la structure physique du système de transmission de données xDSL et pour ajouter l'identifiant décrémenté à ces gestions de données en vue d'un traitement ultérieur.

13. Appareil de transmission de données xDSL comprenant une pluralité d'appareils de transmission de données xDSL selon l'une quelconque des revendications 7 à 11, qui relient au moins deux réseaux Ethernet au système de transmission de données xDSL, en particulier pour la mise en oeuvre d'un procédé de transmission de données selon l'une quelconque des revendications 1 à 6.
